# EUROPEAN PATENT APPLICATION

(11) **EP 4 722 922 A1**
(43) Date of publication of application: **08.04.2026**
(21) Application number: 23945603.1
(22) Date of filing: 10.10.2023
(51) Int. Cl.: G06F 11/14

(54) **STATE DATA RESTORATION METHOD AND APPARATUS FOR BLOCKCHAIN, COMPUTER DEVICE, AND MEDIUM**

(30) Priority: 19.07.2023 CN 202310890549
(71) Applicant: Tencent Technology (Shenzhen) Company Limited, Shenzhen, Guangdong 518057 (CN)
(72) Inventor: SHAO, Zhuguang, Shenzhen, Guangdong 518057 (CN)
(74) Representative: Nederlandsch Octrooibureau
(86) International application number: PCT/CN2023/123824
(87) International publication number: WO 2025/015722

(57) **Abstract**

A state data restoration method for a blockchain, executed by a computer device that maintains a first node in a blockchain system. The method comprises: when a proposal message broadcast by a second node in the blockchain system is received, acquiring state data maintained by the first node itself, wherein the proposal message indicates a transaction task, result information for the transaction task, and a block identifier (302); executing the transaction task in the proposal message on the basis of the state data to obtain result information (304); when the result information obtained by executing the transaction task is inconsistent with the result information indicated in the proposal message, acquiring, from a snapshot of another node in the blockchain system, readset information corresponding to the block identifier in the proposal message, wherein the another node is a node in the blockchain system other than the first node (306); and restoring the state data on the basis of the readset information to obtain restored state data, wherein the restored state data is used for re-executing the transaction task to obtain an execution result (308).

## Description

### RELATED APPLICATION

This application claims priority to Chinese Patent Application No. 2023108905491, entitled "STATE DATA RESTORATION METHOD AND APPARATUS FOR BLOCKCHAIN, COMPUTER DEVICE, AND MEDIUM" and filed on July 19, 2023, which is incorporated herein by reference in its entirety.

### FIELD OF THE TECHNOLOGY

This application relates to the field of computer technologies, and in particular, to the field of blockchain technologies, and in particular, to a state data restoration method and apparatus for a blockchain, a computer device, a storage medium, and a computer program product.

### BACKGROUND OF THE DISCLOSURE

A blockchain is a new decentralized distributed ledger technology that can securely store transactions or other data, and is characterized in that information stored in the blockchain cannot be forged or tampered with. A blockchain consensus algorithm drives each node in the blockchain to participate in a transaction verification process, to ensure that all transactions in the blockchain are confirmed to be trustworthy. To ensure data and information security, in a blockchain consensus process, a node verifies transaction tasks in a proposal message, that is, the node executes one by one the transaction tasks included in the proposal message, and uses state data in an actual transaction task execution process. Although locally stored state data of a node is usually stored by using a database, there is no problem because it is not database storage. A part of the state data may be damaged due to some special reasons, for example, a case in which data is not written completely or a disk corresponding to a file is damaged. Therefore, the lost or damaged state data needs to be restored.

However, in a current manner for restoring state data of a blockchain, a generally used manner is obtaining state data from an approved node and directly copying the state data of the node locally. However, the processing process needs manual intervention, that is, in a case that the state data is lost or damaged, the foregoing manner needs manual participation. Because a damage situation of the state data is unpredictable, before manual intervention, the data is continuously in an unusable state. Thus, the node cannot implement a normal consensus procedure, or a problem that consensus is stuck occurs. Alternatively, if the node checks the transaction tasks in the proposal message based on lost or damaged state data, an obtained check result may also be incorrect. Consequently, a voting result generated by the node may be incorrect. Consequently, nodes in an entire blockchain system cannot reach consensus on the proposal message. Consequently, a consensus processing process of the entire blockchain is greatly affected. Consequently, consensus processing efficiency of the blockchain is relatively poor.

### SUMMARY

According to various embodiments of this application, a state data restoration method and apparatus for a blockchain, a computer device, a computer readable storage medium, and a computer program product are provided.

According to a first aspect, this application provides a state data restoration method for a blockchain, performed by a computer device of a first node maintaining a blockchain system, and including:
obtaining, when receiving a proposal message broadcast by a second node in the blockchain system, state data maintained by the first node, the proposal message indicating existence of a transaction task, result information for the transaction task, and a block identifier;
executing the transaction task in the proposal message based on the state data, to obtain result information;
obtaining, when the result information obtained after executing the transaction task is inconsistent with the result information indicated by the proposal message, read set information that corresponds to the block identifier in the proposal message from a snapshot of another node in the blockchain system, the another node being a node in the blockchain system other than the first node;
restoring the state data based on the read set information, to obtain restored state data, the restored state data being configured for re-executing the transaction task to obtain an execution result.

According to a second aspect, this application further provides a state data restoration apparatus for a blockchain. The apparatus includes:
an obtaining module, configured to obtain, when receiving a proposal message broadcast by a second node in the blockchain system, state data maintained by the first node, the proposal message indicating existence of a transaction task, result information for the transaction task, and a block identifier;
an execution module, configured to execute the transaction task in the proposal message based on the state data, to obtain result information;
the obtaining module being further configured to: obtain, when the result information obtained after executing the transaction task is inconsistent with the result information indicated by the proposal message, read set information that corresponds to the block identifier in the proposal message from a snapshot of another node in the blockchain system, the another node being a node in the blockchain system other than the first node;
a restoration module, configured to restore the state data based on the read set information, to obtain restored state data, the restored state data being configured for re-executing the transaction task to obtain an execution result.

According to a third aspect, this application further provides a computer device, where the computer device includes a memory and a processor, the memory stores computer readable instructions, and when executing the computer readable instructions, the processor implements the state data restoration method for a blockchain in the embodiment of this application.

According to a fourth aspect, this application further provides a computer readable storage medium. The computer readable storage medium has computer readable instructions stored therein, and the computer readable instructions are executed by a processor to implement the state data restoration method for a blockchain in the embodiment of this application.

According to a fifth aspect, this application further provides a computer program product. The computer program product includes computer readable instructions, and the computer readable instructions are executed by a processor to implement the state data restoration method for a blockchain in the embodiment of this application.

Details of one or more embodiments of this application are provided in the accompanying drawings and descriptions below. Other features, objectives, and advantages of this application become apparent from the specification, the drawings, and the claims.

### BRIEF DESCRIPTION OF THE DRAWINGS

To describe technical solutions in embodiments of this application or the conventional technology more clearly, the following briefly introduces the accompanying drawings required for describing the embodiments or the conventional technology. Apparently, the accompanying drawings in the following description show only embodiments of this application, and a person of ordinary skill in the art may still derive other drawings from the accompanying drawings without creative efforts.
FIG. 1 is an exemplary schematic structural diagram of a distributed system applied to a blockchain system according to an embodiment.
FIG. 2 is an exemplary schematic diagram of a block structure in an embodiment.
FIG. 3 is a schematic flowchart of a state data restoration method for a blockchain according to an embodiment.
FIG. 4 is an overall schematic flowchart of state data restoration according to an embodiment.
FIG. 5 is an overall schematic flowchart of a state data restoration method for a blockchain according to an embodiment.
FIG. 6 is a schematic diagram of information carried in a proposal message according to an embodiment.
FIG. 7 is a schematic diagram of obtaining a read set broadcast message and a reply message according to an embodiment.
FIG. 8 is a schematic diagram of restoring data by using a HistoryDB database in a conventional manner according to an embodiment.
FIG. 9 is a schematic diagram of restoring data in two different manners used in a conventional manner according to an embodiment.
FIG. 10 is a schematic diagram of a transaction execution process according to an embodiment.
FIG. 11 is a schematic diagram of generating a read set by another node according to an embodiment.
FIG. 12 is a structural block diagram of a state data restoration apparatus for a blockchain according to an embodiment.
FIG. 13 is an internal structural diagram of a computer device according to an embodiment.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

In the following description, the term "first, second, and third" is merely configured for distinguishing between similar objects, and does not represent a specific sorting for the objects. A specific sequence or an order of "first, second, and third" may be interchanged when allowed, so that the embodiments of this application described herein can be implemented in a sequence other than that shown or described herein.

A system in embodiments of the present disclosure may be a distributed system formed by connecting a client and a plurality of nodes (computing devices in any form in an access network) through network communication.

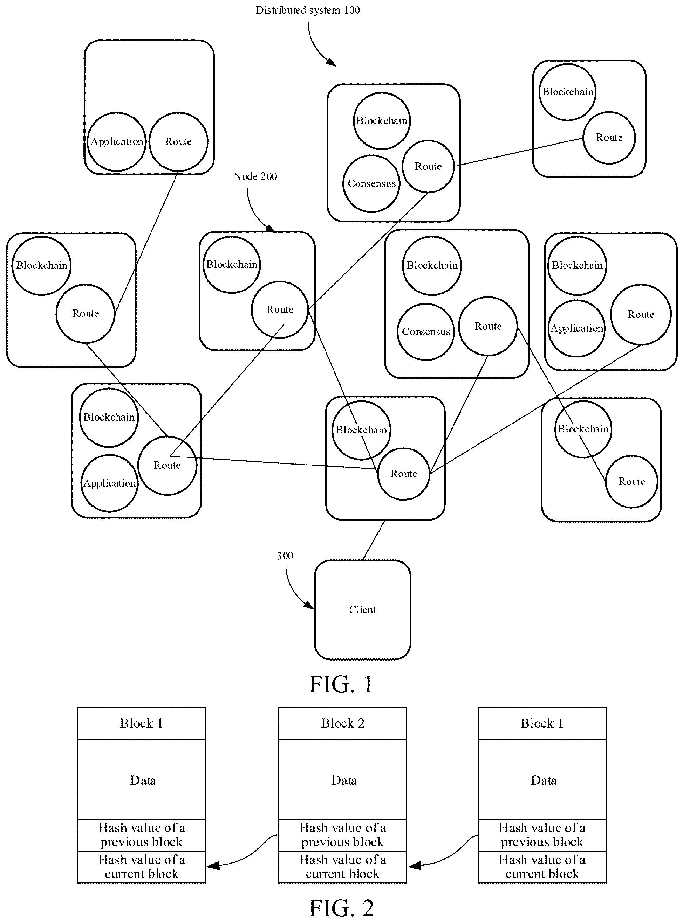

An example in which the distributed system is a blockchain system is used. FIG. 1 is an exemplary schematic structural diagram of a distributed system 100 applied to a blockchain system according to an embodiment of the present disclosure. The distributed system includes a plurality of nodes (computing devices in any form in an access network, such as a server and a user terminal) and a client. A peer-to-peer (P2P) network is formed between the nodes. The P2P protocol is an application-layer protocol running over a transmission control protocol (TCP). In the distributed system, any machine such as a server or a terminal may be added to become a node. The node includes a hardware layer, an intermediate layer, an operating system layer, and an application layer.

Referring to functions of nodes in the blockchain system shown in FIG. 1, the functions include the following.
(1) Routing: it is a basic function of a node, and is configured for supporting communication between nodes.

In addition to the routing function, the node may further have the following functions.

(2) Application: it is deployed in a blockchain, configured to implement a specific service based on an actual service requirement, record data related to function implementation to form recorded data, add a digital signature to the recorded data to represent a source of task data, and transmit the recorded data to another node in the blockchain system, so that the another node adds the recorded data to a temporary block when a source and integrity of the recorded data is successfully verified.

For example, services implemented by the application include:
2.1) Wallet: is configured for providing a transaction function of electronic currency, including transaction initiation (that is, transmitting a transaction record of a current transaction to another node in a blockchain system), and after successfully verifying the transaction record, storing recorded data of the transaction to a temporary block in a blockchain in response to admitting that the transaction is valid. Certainly, the wallet also supports querying for remaining electronic currency in an electronic currency address.
2.2) Shared ledger: is configured for providing functions of operations such as storage, query, and modification of account data. Recorded data of the operations on the account data is transmitted to another node in a blockchain system. The another node stores, after verifying that the account data is valid, the recorded data in a temporary block in response to admitting that the account data is valid, and may further transmit an acknowledgment to a node that initiates the operations.
2.3) Smart contract: is a computerized protocol and can execute terms of a contract. The smart contract is implemented by using code that is deployed in a shared ledger and that is configured for executing when a specific condition is met. The smart contract is configured for completing an automated transaction according to an actual business requirement code. For example, the smart contract is configured for querying a logistics status of a commodity purchased by a buyer, and after the buyer signs for receipt of goods, the electronic currency of the buyer is transferred to an address of the merchant. Certainly, the smart contract is not limited to a contract for executing a transaction, but may also be a contract for processing received information.
3) Blockchain: includes a series of blocks that are consecutive in a sequence of generation time. Once a new block is added to the blockchain, the new block is no longer removed. The block records recorded data submitted by a node in the blockchain system.

FIG. 2 is a schematic diagram of a block structure according to an embodiment of the present disclosure. Each block includes a hash value of a transaction record stored in the block (or a hash value of the block) and a hash value of a previous block. Blocks are connected by using hash values to form a blockchain. In addition, the block may further include information such as a timestamp when the block is generated. The blockchain is essentially a decentralized database, and is a string of data blocks generated through association by using a cryptographic method. Each data block includes related information, to verify validity (anti-counterfeiting) of information thereof and generate a next block.

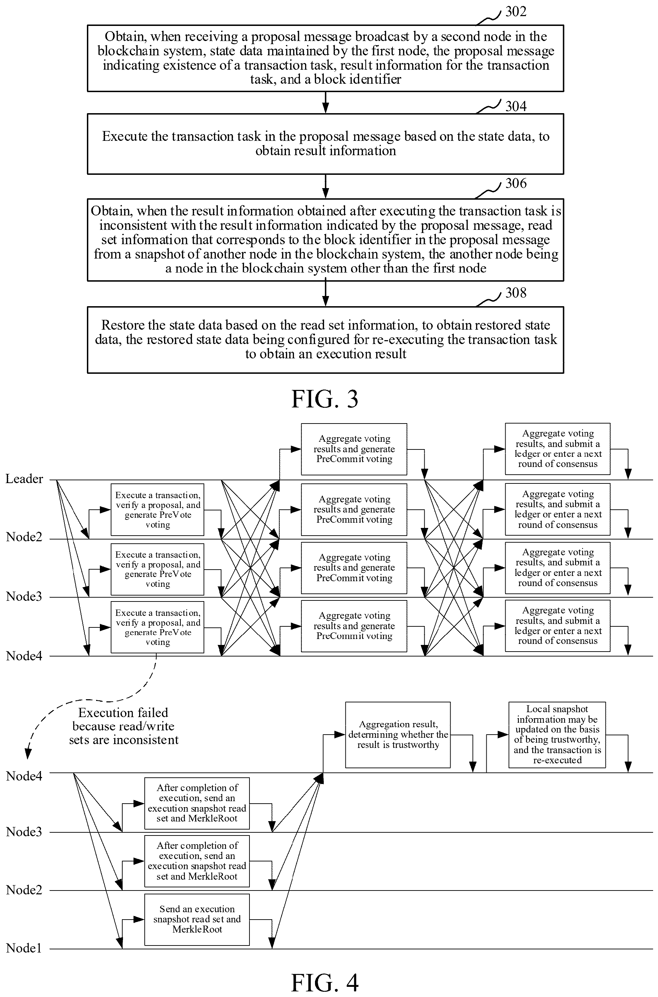

In an embodiment, as shown in FIG. 3, a state data restoration method for a blockchain is provided. This embodiment is described by using an example in which the method is applied to a first node in a node cluster in a blockchain system in FIG. 1. The first node is maintained by a computer device, that is, the computer device implements a function of the first node. The method is performed by the computer device. The method includes the following operations:

Operation 302: Obtain, when receiving a proposal message broadcast by a second node in the blockchain system, state data maintained by the first node, the proposal message indicating existence of a transaction task, result information for the transaction task, and a block identifier.

The blockchain is a chain formed by blocks. Each block stores specific information, and the information is connected to form a chain according to a generation time sequence of the information. The blockchain is stored on each node in the blockchain system. As long as there is one node in the blockchain system that can work, the blockchain is secure. These nodes are maintained by computer devices. Each computer device implements functions of one or more nodes, and provides storage space and computational support for the entire blockchain system. The first node and the second node are nodes in a node cluster of the blockchain system, and the first node and the second node are different nodes. To modify information in a blockchain, more than half of nodes need to agree, and information in all the nodes is modified. The nodes are usually mastered by different entities. Therefore, it is extremely difficult to tamper with information in a blockchain. Compared with a conventional network, a blockchain has two major core features: First, it is difficult to tamper with data; and second, it is decentralized. Based on the two features, information recorded by the blockchain is more real and reliable, which can help resolve the problem that people are not trusted with each other. Types of blockchains include a public blockchain, a consortium blockchain, a private blockchain, and the like. A blockchain system in this application may be a consortium blockchain system.

The block identifier is an identifier configured for uniquely identifying a block. The transaction task in the proposal message is a transaction task obtained by a leader node from a transaction pool when the leader node constructs a block. In some cases, the transaction task in this application may also be referred to as a transaction. For example, the transaction task in this application may be a transaction task obtained by the leader node (that is, the second node) by screening the transaction pool in descending order of processing priorities corresponding to contracts of transaction tasks.

The result information is a check result obtained by checking validity of each transaction task in the proposal message by a follower node. In some cases, the result information may also be referred to as a validity check result. For example, the result information in this application may include an execution result and a read/write set. The execution result is a result returned by executing a contract corresponding to the transaction task.

After a newly created blockchain is enabled, when a new block is generated in the blockchain, a leader node in a node cluster is responsible for generating a proposal message for the new block, and broadcasting the proposal message, so that follower nodes verify the proposal message and determine whether consensus can be reached on the new block in the proposal message. When consensus is reached on the new block, each node in the node cluster may add the new block to a local ledger, that is, store the new block. A consensus environment of the blockchain in this application may be a BFT-type consensus-based blockchain bottom-layer model. Under the BFT-type consensus-based blockchain bottom-layer model, there are usually a leader node and a follower node. The leader node is responsible for generating a proposal for a new block, and the follower node performs verification to determine whether consensus can be reached on a block in the proposal. Byzantine fault tolerance (BFT) is a consensus mechanism.

The second node is a leader node, and the leader node is a node in the node cluster that is responsible for generating a proposal message for the new block. The leader node may rotate in the node cluster. For example, under the BFT-type consensus-based blockchain bottom-layer model, assuming that a blockchain system includes three nodes, which are respectively a node 1, a node 2, and a node 3, when a new block is generated in the blockchain system, each node (the node 1, the node 2, and the node 3) in the node cluster may determine whether the node is a leader node. For example, each node in the node cluster may determine, according to a parameter in a block maintained by the first node, whether a block production condition is satisfied. When a node (the node 1) determines that the node meets the block production condition, the node 1 becomes the leader node, that is, the second node.

The first node is a follower node. Each follower node in the blockchain system may perform the state data restoration method for a blockchain in this embodiment of this application. When the state data restoring method for a blockchain is described for a particular follower node, the first node is configured to refer to the particular follower node.

The follower node refers to a node that is in the node cluster and that is responsible for verifying the proposal message of the new block. For example, under the BFT-type consensus-based blockchain bottom-layer model, assuming that a blockchain system includes three nodes, which are respectively a node 1, a node 2, and a node 3, and a leader node is the node 2 at a current moment, and the node 1 and the node 3 are both follower nodes.

The proposal message is a communication message during communication between nodes in the blockchain. For example, the communication message may further include a consensus message, a voting message, and the like. The proposal message in this application is a message carrying a proposal. For example, a proposal message indicates a proposal 1, and the proposal 1 is generated for a newly generated block 1.

The state data refers to data generated in a process of executing a transaction task. For example, the state data in this application may be: key-value information generated in a transaction task execution process. A local database maintained by each node, a first node, in the blockchain system stores data generated in a process of executing a transaction task. For example, each node may store state data by using a state database, and store transaction task information by using a block database, such as transaction information and a block header transmitted by a user.

Specifically, after a newly created blockchain is enabled, when a new block is generated in the blockchain and consensus needs to be performed, the leader node (that is, the second node) in the node cluster may capture a preset quantity of transaction tasks from a transaction pool, encapsulate the captured transaction tasks into a proposal message of the new block, and broadcast the proposal message to follower nodes in the blockchain, so that the follower nodes (including the first node) reach consensus on the new block based on the transaction tasks in the proposal message. That is, in this application, the leader node (the second node) may package the preset quantity of captured transaction tasks into one proposal, and broadcast the proposal to all follower nodes in the blockchain in a message manner. When each follower node (including the first node) receives the proposal message, each follower node (including the first node) may verify all transaction tasks in the proposal message, to obtain a verification result. When the verification result indicates that at least one of all the transaction tasks in the proposal message is invalid, the follower nodes (including the first node) generate voting messages that do not agree on consensus on the new block. Meanwhile, the follower nodes may receive voting messages broadcast by other nodes. When a quantity of voting messages that agree on consensus the new block among the voting messages meets a preset condition, consensus may be reached on the new block, that is, the new block may be added to the blockchain, and each node in the blockchain system may also add the new block to a local ledger.

When the first node as the follower node verifies the transaction task in the proposal message, the first node needs to locally obtain state data maintained by the follower node. That is, when each follower node receives the proposal message broadcast by the leader node (for example, the second node), each follower node may obtain the state data locally maintained by the follower node. For example, when a follower node (for example, the first node) in the node cluster receives the proposal message broadcast by the leader node, the follower node (for example, the first node) may obtain the state data from the state database maintained by the follower node (for example, the first node).

The state database in this application is a database configured for storing state data, that is, configured for storing key-value information generated in a transaction task execution process.

For example, under the BFT-type consensus-based blockchain bottom-layer model, after a newly created blockchain is enabled, when a new block is generated in the newly created blockchain, each node in the node cluster may determine whether the node is a leader node. For example, each node in the node cluster may determine, according to a parameter in a block maintained by the node, whether a block production condition is satisfied. When a node determines that the node meets the block production condition, the node is the leader node. The block production condition is a condition configured for triggering block production. For example, in this application, the block production condition may be set as that a height value is greater than a preset threshold, and the preset threshold may be 1. The node for block production has a qualification to encapsulate a transaction task into a proposal message of a to-be-consensus block.

Further, after a node (the node 1) in the node cluster determines that the node is a leader node, the leader node produces a block, and starts a new round of consensus. That is, the leader node is responsible for generating a proposal for a new block. The leader node may grab a preset quantity of transaction tasks from a transaction pool, encapsulate the grabbed transaction tasks into a proposal message 1 of the new block 1, and broadcast the proposal message 1 to follower nodes in the blockchain, so that the follower nodes reach consensus on the new block 1 based on the transaction tasks in the proposal message 1. When a follower node (that is, the first node, for example, the node 2) in the node cluster receives the proposal message broadcast by the leader node, the follower node may obtain state data from a local state database (StateDB) maintained by the follower node.

Operation 304: Execute the transaction task in the proposal message based on the state data, to obtain result information.

The read/write set refers to data generated in a process of executing the transaction task. In some embodiments, the read/write set itself may be state data.

The block read/write set hash value is a MerkleRoot generated from read/write sets of all transaction tasks included in a block, and the block read/write set hash value may also be referred to as a block read/write set hash or RWSetRoot.

Specifically, each follower node in the node cluster receives the proposal message broadcast by the second node, and after the first node as a follower node obtains the state data maintained by the first node, each node may execute the transaction task in the proposal message based on the obtained state data (in parallel or series), to obtain corresponding result information for executing each transaction task. That is, in this application, a manner in which a node executes a transaction task includes parallel execution and serial execution.

Operation 306: Obtain, when the result information obtained after executing the transaction task is inconsistent with the result information indicated by the proposal message, read set information that corresponds to the block identifier in the proposal message from a snapshot of another node in the blockchain system, the another node being a node in the blockchain system other than the first node.

The result information indicated by the proposal message is information obtained after the leader node executes each transaction task in the proposal message. For example, in this application, the result information indicated by the proposal message may include an execution result and a read/write set.

The another node refers to another node other than the current follower node (itself) in the node cluster. For example, under the BFT-type consensus-based blockchain bottom-layer model, it is assumed that a blockchain system includes three nodes, which are respectively a node 1, a node 2, and a node 3, a leader node at a current moment is the node 2, and the node 1 and the node 3 are both follower nodes. For the node 1, the node 2 and the node 3 are both other nodes.

The snapshot refers to a data structure, and is configured for storing data read from the database by the node when the node executes a transaction task. For example, read set information corresponding to a block identifier may be read from the snapshot.

The read set information refers to data read from a database by a node when the node executes a transaction task. For example, the read set information in this application may include key-value information.

Further, after each node executes the transaction task in the proposal message based on the obtained state data (in parallel or series), to obtain the result information corresponding to executing each transaction task, each node may compare the obtained result information corresponding to each transaction task with the result information corresponding to each transaction task indicated by the proposal message, to obtain a corresponding comparison result.

Alternatively, in some cases, if the proposal message does not carry the result information corresponding to each transaction task, but carries the block read/write set hash value, after each node obtains the result information corresponding to executing each transaction task, each node may calculate the block read/write set hash value based on the obtained result information corresponding to each transaction task, compare the block read/write set hash value calculated by each node with the block read/write set hash value indicated by the proposal message, and may obtain a corresponding comparison result.

For example, under the BFT-type consensus-based blockchain bottom-layer model, when a first node (node 2) as a follower node in a node cluster receives a proposal message A broadcast by a second node (node 1) as a leader node, the first node may obtain state data from a local state database (StateDB) maintained by the first node, and execute each transaction task in the proposal message based on the state data (in parallel or in series), to obtain an execution result and a read/write set that correspond to each transaction task.

Further, when the proposal message A carries a transaction read/write set hash value of each transaction task, the first node as the follower node may calculate a transaction read/write set hash value of each transaction task according to the obtained read/write set corresponding to each transaction task, and compare the calculated transaction read/write set hash value of each transaction task with a transaction read/write set hash value of each transaction task carried in the proposal message A, to obtain a comparison result corresponding to each transaction task.

For example, the first node may calculate a transaction read/write set hash value R of a transaction task 1 according to an obtained read/write set 1 corresponding to the transaction task 1, and compare the calculated transaction read/write set hash value R=1 of the transaction task 1 with a transaction read/write set hash value R=1 of the transaction task 1 carried in the proposal message A, to obtain that a comparison result corresponding to the transaction task 1 is: "consistent".

Alternatively, when the proposal message A does not carry the transaction read/write set hash value of each transaction task but carries a block read/write set hash value B, the first node may calculate hash values of read/write sets of all transaction tasks according to the obtained read/write set corresponding to each transaction task, that is, the block read/write set hash value B=2, and compare the calculated block read/write set hash value B=2 with the block read/write set hash value B=2 carried in the proposal message A. Alternatively, it may be obtained that a comparison result is: "consistent".

Further, when the comparison result indicates that the result information obtained by the first node is inconsistent with the result information indicated by the proposal message, the first node may obtain the read set information corresponding to the block identifier in the proposal message from the snapshot of the another node. For example, the first node may transmit the broadcast message (carrying the block identifier in the proposal message) configured for obtaining the read set information, so that the another node returns a corresponding reply message based on the block identifier in the broadcast message. That is, the reply message returned by the another node carries the read set information obtained from the snapshot, so that the first node can obtain, from the reply message returned by the another node, the read set information corresponding to the block identifier in the proposal message.

For example, under the BFT-type consensus-based blockchain bottom-layer model, assuming that a blockchain system includes three nodes, which are respectively a node 1, a node 2, and a node 3, when a first node (node 2) as a follower node in a node cluster receives a proposal message A broadcast by a second node (node 1) as a leader node, the first node may obtain state data from a local state database (StateDB) maintained by the first node, and execute each transaction task in the proposal message based on the state data (in parallel or in series), to obtain an execution result and a read/write set that correspond to each transaction task.

Further, when the proposal message A carries a transaction read/write set hash value of each transaction task, the first node may calculate a transaction read/write set hash value of each transaction task according to the obtained read/write set corresponding to each transaction task, and compare the calculated transaction read/write set hash value of each transaction task with a transaction read/write set hash value of each transaction task carried in the proposal message A, to obtain a comparison result corresponding to each transaction task.

For example, the first node as the follower node may calculate a transaction read/write set hash value R of a transaction task 1 according to an obtained read/write set 1 corresponding to the transaction task 1, and compare the calculated transaction read/write set hash value R=1 of the transaction task 1 with a transaction read/write set hash value R=2 of the transaction task 1 carried in the proposal message A, to obtain that a comparison result corresponding to the transaction task 1 is: "inconsistent". That is, when the transaction read/write set hash value R=1 of the transaction task 1 calculated by the first node is inconsistent with the transaction read/write set hash value R=2 of the transaction task 1 carried in the proposal message A, the first node (node 2) may obtain, from snapshots of other nodes (node 1 and node 3), the read set information corresponding to the block identifier in the proposal message.

Operation 308: Restore the state data based on the read set information, to obtain restored state data, the restored state data being configured for re-executing the transaction task to obtain an execution result.

The restored state data is state data obtained after updating local state data maintained by the first node. For example, when a node A as a first node receives a proposal message broadcast by a second node as a leader node, the node A obtains state data A01 maintained by the node A, and the node A restores, based on read set information A02 obtained from another node, the state data A01 maintained by the node A, to obtain state data A02 after the restoring. That is, the state data after the restoring may be different from the state data before the restoring, or may be the same as the state data before the restoring.

Specifically, after the first node obtains the read set information corresponding to the block identifier in the proposal message from the snapshot of the another node, the first node may perform reliability verification on the obtained read set information, to obtain the verification result. When the verification result indicates that the read set information is trustworthy, the first node may restore, based on the read set information, the state data maintained by the first node, to obtain restored state data. Further, after the first node obtains the restored state data, the first node may re-execute the transaction task in the proposal message based on the restored state data, to obtain new result information, and compare the new result information with the result information indicated by the proposal message, to obtain a second comparison result.

For example, under the BFT-type consensus-based blockchain bottom-layer model, assuming that a blockchain system includes three nodes, which are respectively a node 1, a node 2, and a node 3, when a specific first node (node 2) as a follower node in a node cluster receives a proposal message A broadcast by a second node (node 1) as a leader node, the first node may obtain state data A01 from a local state database (StateDB) maintained by itself, and execute each transaction task in the proposal message based on the state data A01 (in parallel or in series), to obtain an execution result and a read/write set that correspond to each transaction task.

Further, when the proposal message A carries a transaction read/write set hash value of each transaction task, the first node may calculate a transaction read/write set hash value of each transaction task according to the obtained read/write set corresponding to each transaction task, and compare the calculated transaction read/write set hash value of each transaction task with a transaction read/write set hash value of each transaction task carried in the proposal message A, to obtain a comparison result corresponding to each transaction task.

For example, the first node may calculate a transaction read/write set hash value R of a transaction task 1 according to an obtained read/write set 1 corresponding to the transaction task 1, and compare the calculated transaction read/write set hash value R=1 of the transaction task 1 with a transaction read/write set hash value R=2 of the transaction task 1 carried in the proposal message A, to obtain that a comparison result corresponding to the transaction task 1 is: "inconsistent". That is, when the transaction read/write set hash value R=1 of the transaction task 1 calculated by the first node is inconsistent with the transaction read/write set hash value R=2 of the transaction task 1 carried in the proposal message A, the first node (node 2) may obtain, from snapshots of other nodes (node 1 and node 3), the read set information corresponding to the block identifier in the proposal message.

Assuming that the first node (node 2) can obtain, from the snapshots of other nodes (node 1 and node 3), the read set information corresponding to the block identifier in the proposal message is A02, when the first node (node 2) verifies that the read set information A02 is trustworthy, the first node (node 2) may restore, based on the read set information A02, the state data A01 maintained by the first node (node 2), to obtain restored state data A02. Each transaction task in the proposal message A is executed again based on the restored state data A02, to obtain a new execution result and a read/write set that correspond to each transaction task, and the new execution result and the read/write set are compared with the execution result and the read/write set indicated by the proposal message, to obtain a second comparison result: "consistent".

In this embodiment, when the first node receives the proposal message broadcast by the second node, the first node obtains the state data maintained by the first node, and the first node executes the transaction task in the proposal message based on the state data, to obtain the result information. When the result information is inconsistent with the result information indicated by the proposal message, the first node obtains the read set information corresponding to the block identifier in the proposal message from the snapshot of the another node. The first node restores the state data based on the read set information, to obtain restored state data. The restored state data is configured for re-executing the transaction task to obtain a new execution result.

Because the read set information in the snapshot of the another node is generated when the another node executes the transaction task in the proposal message, that is, the read set information in the snapshot of the another node is read by the another node from the database of the another node when the another node executes the transaction task in the proposal message, when the result information obtained after execution by the first node is inconsistent with the result information indicated by the proposal message, the read set information that is obtained by the first node from the snapshot of the another node and that corresponds to the block identifier in the proposal message is equivalent to original state data obtained in the database of the another node. Therefore, the node may restore, based on the read set information obtained from the snapshot of the another node, the local state data maintained by the first node, to obtain restored state data, and subsequently, re-execute the transaction task based on the restored state data. Therefore, the node can accurately verify whether the state data maintained by the first node has a problem, and can automatically complete restoration of the state data in the consensus process, thereby effectively improving consensus processing efficiency of the blockchain while ensuring security of the entire blockchain.

In an embodiment, the result information includes an execution result and a transaction read/write set; and the obtaining, when receiving a proposal message broadcast by a second node in the blockchain system, state data maintained by the first node includes: obtaining, when receiving the proposal message broadcast by the second node in the blockchain system, state data from a state database maintained by the first node; and the executing the transaction task in the proposal message based on the state data, to obtain result information includes: obtaining a contract that corresponds to the transaction task in the proposal message, and executing the transaction task in the proposal message based on the contract and the state data, to obtain the execution result and the transaction read/write set.

The transaction read/write set is a read/write set generated in a process of executing each transaction task. For example, a read/write set generated in a process of executing a transaction task A is a read/write set A, and a read/write set generated in a process of executing a transaction task B is a read/write set B.

The contract is a smart contract, is not intelligent itself, and is a piece of code that can implement service logic. The piece of code or logic is executed by using a virtual machine of a node in a blockchain. For the blockchain system, it is required that statuses of all nodes need to be consistent, that is, the blockchain system is a deterministic state machine. Only in this way, the blockchain system can reach consensus; otherwise, the entire blockchain cannot run normally.

Specifically, under the BFT-type consensus-based blockchain bottom-layer model, after a second node (node 1) in the node cluster determines the second node as a leader node, the second node produces a block, and starts a new round of consensus. That is, the second node is responsible for generating a proposal for the new block. The second node may grab a preset quantity of transaction tasks from the transaction pool, encapsulate the grabbed transaction tasks into a proposal message 1 of a new block 1, and broadcast the proposal message 1 to follower nodes in the blockchain, so that the follower nodes reach consensus on the new block 1 based on the transaction tasks in the proposal message 1. When the first node (node 2) as a follower node in the node cluster receives the proposal message broadcast by the second node used as the leader node, the first node may obtain state data from the local state database (StateDB) maintained by the first node.

Further, the first node may obtain a contract corresponding to each transaction task in the proposal message 1, and execute the transaction task in the proposal message 1 based on the obtained contract and state data (in parallel or series), to obtain an execution result and a transaction read/write set that correspond to each transaction task in the proposal message 1. For example, assuming that the proposal message 1 includes a transaction task A, the first node may obtain a contract save1 that corresponds to the transaction task A in the proposal message 1, execute the transaction task A based on the obtained contract save1 and state data A01 maintained by the first node, and may obtain an execution result S and a transaction read/write set K that correspond to the transaction task A.

In this embodiment, the first node verifies the transaction task by obtaining the local state data maintained by the first node. When finding that the transaction read/write set calculated by the first node is inconsistent with the transaction read/write set indicated by the proposal message, the first node may obtain the corresponding transaction read/write set from a snapshot of another node, so that the first node can accurately verify whether the state data maintained by the first node is problematic, and can automatically complete restoration of the state data in a consensus process.

In an embodiment, the result information includes a transaction read/write set corresponding to the transaction task, and the proposal message further indicates existence of a transaction read/write set hash value determined based on the transaction read/write set corresponding to the transaction task. The state data restoration method for a blockchain further includes: determining a transaction read/write set hash value of the transaction task based on the transaction read/write set; comparing the transaction read/write set hash value with the transaction read/write set hash value indicated by the proposal message, to obtain a comparison result; generating a voting message of the first node in a round based on the comparison result; determining, when receiving a voting message of another node in a round broadcast by the another node, a voting message of the first node in another round based on the voting message of the first node in a round and the voting message of the another node in a round; and determining, when receiving a voting message of the another node in another round broadcast by the another node, a consensus result of a block corresponding to the block identifier based on the voting message of the first node in another round and the voting message of the another node in another round.

The transaction read/write set hash value is a MerkleRoot generated by all read/write sets generated by the transaction task, and the transaction read/write set hash value may also be referred to as a transaction read/write set hash or a transaction read/write set RWSetHash.

The voting message of the first node in a round and the voting message of the first node in another round are voting messages of the first node in different rounds. For example, the voting message of the first node in a round may be a voting message of a current node in a first round, and the voting message of the first node in another round may be a voting message of the first node in a second round.

The voting message of the another node in a round and the voting message of the another node in another round are voting messages of the another node in different rounds. For example, the voting message of the another node in a round may be a voting message of the another node in a first round, and the voting message of the another node in another round may be a voting message of the another node in a second round.

In this application, the voting message of the first node in a round, the voting message of the another node in a round, the voting message of the first node in another round, and the voting message of the another node in another round are only configured for distinguishing voting messages broadcast by different nodes in different rounds.

Consensus refers to consensus on a newly generated block. Only after the newly generated block is successfully verified by follower nodes (including the first node) and consensus is reached thereon, the block can be linked to a blockchain, and nodes in a blockchain system can store the block reaching the consensus in a local ledger.

Specifically, under the BFT-type consensus-based blockchain bottom-layer model, after a second node (node 1) in the node cluster determines the second node as a leader node, the second node produces a block, and starts a new round of consensus. The second node may broadcast the proposal message 1 to follower nodes (including the first node) in the blockchain, so that the follower nodes (including the first node) reach consensus on the new block 1 based on the transaction task in the proposal message 1.

After the first node (node 2) as a follower node in the node cluster receives the proposal message 1 broadcast by the second node, the first node executes the transaction task in the proposal message 1 based on the state data maintained by the first node, to obtain an execution result and a transaction read/write set that correspond to each transaction task, the first node may determine a transaction read/write set hash value of each transaction task based on the transaction read/write set corresponding to each transaction task, and compare the transaction read/write set hash value of each transaction task with the transaction read/write set hash value of each transaction task indicated by the proposal message, to obtain a comparison result.

Further, the first node may generate a voting message of the first node in a round based on the comparison result; and the first node may generate, when receiving a voting message of another node in a round broadcast by the another node, a voting message of the first node in another round based on the voting message of the first node in a round and the voting message of the another node in a round.

When the first node receives the voting message of the another node in another round broadcast by the another node, the first node may determine whether consensus can be reached on the block corresponding to the block identifier in the proposal message based on the voting message of the first node in another round and the voting message of the another node in another round.

For example, when a quantity of voting messages that are in the voting message of the first node in another round and the voting message of the another node in another round and that agree on consensus on the block satisfies a preset condition, the first node may determine that consensus is reached on the block.

The preset condition refers to a preset condition for reaching consensus on a block. For example, the preset condition may be set to 2f+1, f refers to a quantity of malicious nodes in the blockchain system, and is a 3f+1 model in Byzantine consensus. For example, if there are four nodes in the blockchain system, f=1 node is allowed to be a malicious node, but cannot be more, and 2f+1 is a quantity of correct nodes. That is, when the quantity of voting messages that agree on the block consensus among the voting messages satisfies the quantity 2f+1, consensus can be reached on the block.

For example, as shown in FIG. 4, FIG. 4 is an overall schematic flowchart of state data restoration. Under the BFT-type consensus-based blockchain bottom-layer model shown in FIG. 4, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message. As shown in FIG. 4, when a first node (Node4) as a follower node in the node cluster receives the proposal message broadcast by the leader node, after the first node (Node4) executes the transaction task in the proposal message based on the state data maintained by the first node, to obtain an execution result and a transaction read/write set that correspond to each transaction task, the first node may determine a transaction read/write set hash value of each transaction task based on the transaction read/write set corresponding to each transaction task, and compare the transaction read/write set hash value of each transaction task with the transaction read/write set hash value of each transaction task indicated by the proposal message, to obtain a comparison result.

Further, the first node may generate a voting message (Prevote voting) of the first node in a round based on the comparison result; and the first node may generate, when receiving a voting message (Prevote voting) of another node in a round broadcast by the another node, a voting message (PreCommit voting) of the first node in another round based on the voting message (Prevote voting) of the first node in a round and the voting message (Prevote voting) of the another node in a round. When the first node receives the voting message (PreCommit voting) of the another node in another round broadcast by the another node, the first node may determine whether consensus can be reached on the block corresponding to the block identifier in the proposal message based on the voting message (PreCommit voting) of the first node in another round and the voting message (PreCommit voting) of the another node in another round.

For example, when a quantity of voting messages that are in the voting message of the first node in another round and the voting message of the another node in another round and that agree on consensus on the block satisfies a preset condition, the first node may determine that consensus is reached on the block, and submit the ledger. Alternatively, when a quantity of voting messages that are in the voting message of the first node in another round and the voting message of the another node in another round and that agree on consensus on the block does not satisfy the preset condition, the first node may determine that consensus is not reached on the block, and may enter a next round of consensus processing process.

In this embodiment, the first node verifies the transaction task by obtaining the local state data maintained by the first node. When finding that the transaction read/write set calculated by the first node is inconsistent with the transaction read/write set indicated by the proposal message, the first node may obtain the corresponding transaction read/write set from a snapshot of another node, so that the first node can accurately verify whether the state data maintained by the first node is problematic. In addition, the first node can perform a normal consensus procedure, that is, the first node can automatically complete restoration of the state data in the consensus process.

In an embodiment, the obtaining, when the result information obtained after executing the transaction task is inconsistent with the result information indicated by the proposal message, read set information that corresponds to the block identifier in the proposal message from a snapshot of another node in the blockchain system includes: obtaining the read set information corresponding to the block identifier in the proposal message from a snapshot of at least one node in the another node when the comparison result indicates that the transaction read/write set hash value in the result information is inconsistent with the transaction read/write set hash value indicated by the proposal message.

Specifically, As shown in FIG. 4, FIG. 4 is an overall schematic flowchart of state data restoration. Under the BFT-type consensus-based blockchain bottom-layer model shown in FIG. 4, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message.

As shown in FIG. 4, when a first node (Node4) as a follower node in the node cluster receives the proposal message broadcast by the second node, after the first node (Node4) executes the transaction task in the proposal message based on the state data maintained by the first node, to obtain an execution result and a transaction read/write set that correspond to each transaction task, the first node may determine a transaction read/write set hash value of each transaction task based on the transaction read/write set corresponding to each transaction task, and compare the transaction read/write set hash value of each transaction task with the transaction read/write set hash value of each transaction task indicated by the proposal message, to obtain a comparison result.

When the comparison result indicates that the transaction read/write set hash value obtained by the first node (Node4) is inconsistent with the transaction read/write set hash value indicated by the proposal message, as shown in FIG. 4, the first node (Node4) may obtain, from the snapshot of at least one of the other nodes (Node1, Node2, and Node3), the read set information corresponding to the block identifier in the proposal message.

For example, when the comparison result indicates that the transaction read/write set hash value K=4 of the transaction task A obtained by the first node (Node4) is inconsistent with the transaction read/write set hash value K=2 of the transaction task A indicated by the proposal message, the first node (Node4) may transmit a broadcast message (carrying the identifier of the transaction task A) configured for obtaining read set information, so that the other nodes (Node1, Node2, and Node3) return corresponding reply messages based on the identifier of the transaction task A in the broadcast message, that is, the reply messages returned by the other nodes carry read set information TxReadSet (1) and MerkleRoot (that is, TxReadHash) corresponding to the identifier TxID (1) of the transaction task A obtained from the snapshot, so that the node (Node4) can obtain, from the reply messages returned by the other nodes, the read set information TxReadSet (1) and MerkleRoot (that is, TxReadHash) corresponding to the transaction task A, that is, TxID (1). In this way, a process of synchronizing state data can be completed at the same time of consensus, and HistoryDB does not need to be relied on. Because an operation is performed in the consensus process, on one hand, a processing procedure thereof is automatically completed, and on the other hand, a normal consensus processing procedure is not affected, thereby effectively improving a security problem of data restoration.

In an embodiment, the obtaining the read set information corresponding to the block identifier in the proposal message from a snapshot of at least one node in the another node includes: obtaining a quantity of fault-tolerant nodes in the blockchain system, and determining a target quantity based on the quantity of fault-tolerant nodes, the target quantity being greater than the quantity of fault-tolerant nodes; selecting nodes of the target quantity from the another node; and searching snapshots of the nodes of the target quantity for the read set information corresponding to the block identifier in the proposal message.

In some embodiments, the state data restoration method for a blockchain further includes: waiting, when the read set information is not found, for the another node to execute the transaction task in the proposal message, so that the another node updates the snapshot after completing the execution, and searching the updated snapshot for the read set information corresponding to the block identifier.

The quantity of fault-tolerant nodes is a preset quantity of fault-tolerant nodes. For example, if the quantity of fault-tolerant nodes is set to f, the target quantity may be f+1. For example, if there are four nodes in an entire environment (blockchain system), f=1 node is allowed to be a malicious node, but cannot be more, and f+1 nodes indicate that there definitely is one honest node.

Specifically, as shown in FIG. 4, when the comparison result indicates that the transaction read/write set hash value obtained by the first node (Node4) is inconsistent with the transaction read/write set hash value indicated by the proposal message, the first node (Node4) may obtain, from the snapshot of at least one of the other nodes (Node1, Node2, and Node3), the read set information corresponding to the block identifier in the proposal message.

For example, the first node (Node4) may determine, based on the quantity f=1 of fault-tolerant nodes, that the target quantity is f+1=1+1=2, that is, the first node (Node4) may select any two nodes (Node2 and Node3) from the other nodes (Node1, Node2, and Node3). Assuming that the first node (Node4) does not find, in snapshots of Node2 and Node3, read set information corresponding to the block identifier A in the proposal message, Node2 and Node3 possibly have not completed executing all transaction tasks in the proposal message, the first node (Node4) may wait for Node2 and Node3 to complete executing all transaction tasks in the proposal message, update information in the snapshot after the execution is completed, and search the updated snapshot information for the read set information corresponding to the block identifier.

The first node (Node4) may transmit a broadcast message (carrying the block identifier in the proposal message) configured for obtaining the read set information, so that the other nodes (Node2 and Node3) return corresponding reply messages based on the block identifier in the broadcast message. That is, the reply messages returned by Node2 and Node3 carry the read set information and MerkleRoot that correspond to the block identifier obtained from the snapshot, so that the node (Node4) may obtain, from the reply messages returned by Node2 and Node3, the read set information (that is, Tx ReadSet) and MerkleRoot (that is, Tx ReadHash) that correspond to the block identifier.

In addition, if the node (Node4) does not receive, within a preset time period, the corresponding reply messages returned by Node2 and Node3 based on the block identifier in the broadcast message, the first node (Node4) may re-transmit, to the other nodes in the blockchain, the broadcast message (carrying the block identifier in the proposal message such as BlockHeight) configured for obtaining the read set information. In this way, a process of synchronizing state data can be completed at the same time of consensus, and HistoryDB does not need to be relied on. Because an operation is performed in the consensus process, on one hand, a processing procedure thereof is automatically completed, and on the other hand, a normal consensus processing procedure is not affected, thereby effectively improving a security problem of data restoration.

In an embodiment, the state data restoration method for a blockchain further includes: adding a transaction identifier of the transaction task to a target set when the comparison result indicates that the transaction read/write set hash value in the result information is inconsistent with the transaction read/write set hash value indicated by the proposal message; and the obtaining read set information that corresponds to the block identifier in the proposal message from a snapshot of another node in the blockchain system includes: transmitting a broadcast message configured for obtaining the read set information, the broadcast message including a transaction identifier of a transaction task in the target set, so that the another node returns a corresponding reply message based on the transaction identifier of the transaction task in the target set; performing deserialization processing on the reply message when receiving the reply message returned by the another node, to obtain a data structure obtained after the deserialization processing; and using data in the data structure as the read set information corresponding to the block identifier in the proposal message.

The target set is a set for storing transaction identifiers of transaction tasks whose read/write sets are inconsistent. For example, the target set in this application may be a transaction task ID set with inconsistent read/write sets.

Serialization processing refers to a process of converting obtained read set information into a form that can be stored or transmitted. For example, after the read set information is converted into a binary form, the binary form is transmitted as a reply message.

Deserialization processing refers to a process of converting information in a binary form into an original data structure. For example, after a reply message in a binary form is converted into an original data structure, read set information in the data structure can be obtained.

Specifically, as shown in FIG. 4, FIG. 4 is an overall schematic flowchart of state data restoration. Under the BFT-type consensus-based blockchain bottom-layer model shown in FIG. 4, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message.

As shown in FIG. 4, when a first node (Node4) as a follower node in the node cluster receives the proposal message broadcast by the leader node, after the first node (Node4) executes the transaction task in the proposal message based on the state data maintained by the first node, to obtain an execution result and a transaction read/write set that correspond to each transaction task, the first node may determine a transaction read/write set hash value of each transaction task based on the transaction read/write set corresponding to each transaction task, and compare the transaction read/write set hash value of each transaction task with the transaction read/write set hash value of each transaction task indicated by the proposal message, to obtain a comparison result.

When the comparison result indicates that the transaction read/write set hash value K=4 of the transaction task A obtained by the first node (Node4) is inconsistent with the transaction read/write set hash value K=2 of the transaction task A indicated by the proposal message, the first node (Node4) may add the transaction identifier TxA of the transaction task A to the target set RWIDs. Further, the first node (Node4) may broadcast the target set RWIDs to another node after serialization, that is, the first node (Node4) may transmit a broadcast message configured for obtaining read set information, where the broadcast information includes transaction identifiers of transaction tasks in the target set RWIDs, so that the another node returns a corresponding reply message based on the transaction identifier of the transaction task in the target set. When receiving reply messages returned by other nodes (Node1, Node2, and Node3), the first node (Node4) performs deserialization processing on the reply messages, to obtain a data structure obtained after the deserialization processing, and uses data in the data structure obtained after the deserialization processing as the read set information corresponding to the block identifier in the proposal message.

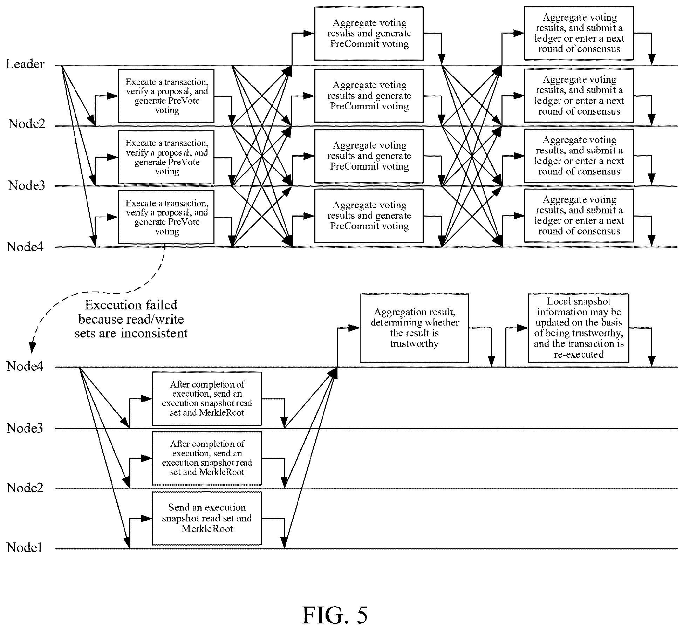

For example, as shown in FIG. 5, FIG. 5 is an overall schematic flowchart of a state data restoration method for a blockchain according to an embodiment. i shown in FIG. 5 represents an ith transaction, Len(Txs) represents a quantity of transactions in the transaction set Txs, Len(RWIDs) represents a quantity of transactions in the set RWIDs, and i++ represents that after i participates in an operation, a value of i is increased by 1. In the process shown in FIG. 5, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message. When the first node (Node4) as a follower node in the node cluster receives the proposal message broadcast by the leader node, the first node (Node4) performs deserialization processing on the proposal message, that is, converts the proposal message (network message) into a data structure that can be processed in a program, and verifies the proposal in the data structure. Content of the verification includes, but is not limited to, verification of validity of a block production node, verification of signature validity, and the like.

Further, when the first node (Node4) successfully verifies the proposal in the data structure, the first node (Node4) may execute, one by one (serially), the transaction tasks included in the proposal, add transaction task IDs whose transaction read/write set hash values are inconsistent to the RWIDs, and serialize the RWIDs and broadcast the RWIDs to another node. That is, the first node (Node4) may transmit a broadcast message configured for obtaining read set information. The broadcast information includes each transaction task ID in the RWIDs, so that the another node returns a corresponding reply message based on the transaction task ID in the RWIDs. When receiving reply messages returned by other nodes (Node1, Node2, and Node3), the first node (Node4) deserializes the reply messages into an application message structure, and uses data in the application message structure obtained after the deserialization as the read set information corresponding to the block identifier in the proposal message. In this way, a process of synchronizing state data can be completed at the same time of consensus, and HistoryDB does not need to be relied on. Because an operation is performed in the consensus process, on one hand, a processing procedure thereof is automatically completed, and on the other hand, a normal consensus processing procedure is not affected, thereby effectively improving a security problem of data restoration.

In an embodiment, the state data restoration method for a blockchain further includes: determining a quantity of reply messages when receiving the reply message returned by the another node; and performing the operation of restoring the state data based on the read set information when the quantity of reply messages is greater than or equal to a target quantity, and read set information in the reply messages is consistent, the target quantity being determined based on the quantity of fault-tolerant nodes in the blockchain system, and the target quantity being greater than the quantity of fault-tolerant nodes.

The quantity of reply messages is a quantity of received reply messages. For example, the first node (Node4) may transmit a broadcast message configured for obtaining read set information, so that other nodes (Node1, Node2, and Node3) return corresponding reply messages based on the block identifier in the broadcast message. Theoretically, the quantity of reply messages that can be received by the first node (Node4) is 3. However, during actual application, the quantity of reply messages received by the first node (Node4) may be 0, 1, 2, and 3, that is, some nodes do not return corresponding reply messages (or timeout).

The target quantity is a quantity determined based on the quantity of fault-tolerant nodes. For example, in this application, the target quantity may be f+1, and f represents the quantity of fault-tolerant nodes. For example, if there are four nodes in an entire environment (blockchain system), f=1 node is allowed to be a malicious node, but cannot be more, and f+1 nodes represent that there definitely is one honest node.

Specifically, under the BFT-type consensus-based blockchain bottom-layer model shown in FIG. 4, when the comparison result indicates that the transaction read/write set hash value K=4 of the transaction task A obtained by the first node (Node4) is inconsistent with the transaction read/write set hash value K=2 of the transaction task A indicated by the proposal message, the first node (Node4) may add the transaction identifier TxA of the transaction task A to the target set RWIDs.

Further, the first node (Node4) may broadcast the target set RWIDs to another node after serialization, that is, the first node (Node4) may transmit a broadcast message configured for obtaining read set information, where the broadcast information includes transaction identifiers of transaction tasks in the target set RWIDs, so that the another node returns a corresponding reply message based on the transaction identifier of the transaction task in the target set. When receiving reply messages returned by other nodes (Node1, Node2, and Node3), the first node (Node4) determines that the quantity of reply messages n=3.

Further, the first node (Node4) may determine whether the read set information in the received reply messages returned by the other nodes (Node1, Node2, and Node3) is consistent. Assuming that the target quantity f+1=1+1=2, because the quantity n=3 of reply messages > the target quantity f+1=1+1=2, when the quantity of reply messages is greater than the target quantity, and the read set information in the reply messages is consistent, the first node (Node4) may perform the operation of restoring, based on the read set information, the state data in the local database maintained by the first node.

For example, as shown in FIG. 5, FIG. 5 is an overall schematic flowchart of a state data restoration method for a blockchain according to an embodiment. In the process shown in FIG. 5, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message. When the first node (Node4) as a follower node in the node cluster receives the proposal message broadcast by the second node, the first node (Node4) performs deserialization processing on the proposal message, that is, converts the proposal message (network message) into a data structure that can be processed in a program, and verifies the proposal in the data structure. Content of the verification includes, but is not limited to, verification of validity of a block production node, verification of signature validity, and the like.

Further, when the first node (Node4) successfully verifies the proposal in the data structure, the first node (Node4) may execute, one by one (serially), the transaction tasks included in the proposal, add transaction task IDs whose transaction read/write set hash values are inconsistent to the RWIDs, and serialize the RWIDs and broadcast the RWIDs to another node. That is, the first node (Node4) may transmit a broadcast message configured for obtaining read set information. The broadcast information includes each transaction task ID in the RWIDs, so that the another node returns a corresponding reply message based on the transaction task ID in the RWIDs. When receiving reply messages returned by other nodes (Node1 and Node3), the first node (Node4) determines that the quantity of reply messages n=2.

Further, the first node (Node4) may determine whether the read set information in the received reply messages returned by the other nodes (Node1 and Node3) is consistent. Assuming that the target quantity f+1=1+1=2, because the quantity n=2 of reply messages is equal to the target quantity f+1=1+1=2, when the quantity of reply messages is equal to the target quantity, and the read set information in the reply messages is consistent, the first node (Node4) may perform the operation of restoring, based on the read set information, the state data in the local database maintained by the first node.

In this way, a process of synchronizing state data can be completed at the same time of consensus, and HistoryDB does not need to be relied on. Because an operation is performed in the consensus process, on one hand, a processing procedure thereof is automatically completed, and on the other hand, a normal consensus processing procedure is not affected, thereby effectively improving a security problem of data restoration.

In an embodiment, the result information includes a transaction read/write set corresponding to the transaction task, the proposal message indicates existence of a first block read/write set hash value, the first block read/write set hash value is generated based on transaction read/write sets of all transaction tasks in the block corresponding to the block identifier, and the state data restoration method for a blockchain further includes: determining a second block read/write set hash value based on the transaction read/write set of the transaction task; and the obtaining, when the result information obtained after executing the transaction task is inconsistent with the result information indicated by the proposal message, read set information that corresponds to the block identifier in the proposal message from a snapshot of another node in the blockchain system includes: obtaining the read set information corresponding to the block identifier in the proposal message from a snapshot of at least one node in the another node when the second block read/write set hash value is inconsistent with the first block read/write set hash value.

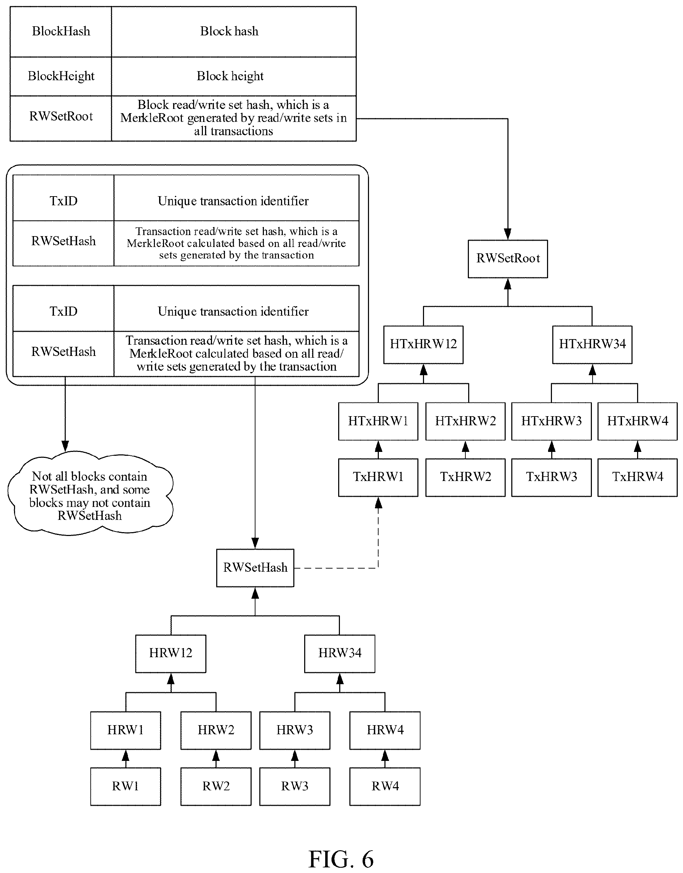

Specifically, as shown in FIG. 6, FIG. 6 is a schematic diagram of carrying information by a proposal message. In information carried in blocks shown in FIG. 6, some blocks carry transaction read/write set hash values (RWSetHash), and some blocks do not carry transaction read/write set hash values (RWSetHash). In some cases, if the proposal message broadcast by the leader node does not carry a transaction read/write set hash value corresponding to each transaction task, but carries a block read/write set hash value, after each follower node (including the first node) obtains result information corresponding to execution of each transaction task, each follower node may calculate a block read/write set hash value based on the obtained result information corresponding to each transaction task, and compare the block read/write set hash value calculated by the follower node with the block read/write set hash value indicated by the proposal message, to obtain a corresponding comparison result.

When the proposal message broadcast by the leader node carries a transaction task and a first block read/write set hash value, after each follower node obtains an execution result and a transaction read/write set that correspond to executing each transaction task, each follower node may determine a second block read/write set hash value based on the transaction read/write set of the transaction task. When the second block read/write set hash value is inconsistent with the first block read/write set hash value indicated by the proposal message, the follower node may obtain, from the snapshot of the at least one node in the another node, the read set information corresponding to the block identifier in the proposal message.

For example, as shown in FIG. 6, if the proposal message broadcast by the leader node does not carry a transaction read/write set hash value that corresponds to each transaction task, but carries a block hash, a block height, and a block read/write set hash value, under the BFT-type consensus-based blockchain bottom-layer model shown in FIG. 4, when the first node (Node4) as a follower node in the node cluster receives the proposal message broadcast by the leader node, after the first node (Node4) executes the transaction task in the proposal message based on state data maintained by the first node, to obtain an execution result and a transaction read/write set that correspond to each transaction task, the first node (Node4) may calculate a second block read/write set hash value based on the transaction read/write set that corresponds to each transaction task, and compare the second block read/write set hash value calculated by the second block hash value with the first block read/write set hash value indicated by the proposal message, to obtain a corresponding comparison result.

When the second block read/write set hash value is inconsistent with the first block read/write set hash value indicated by the proposal message, the first node (Node4) may obtain, from the snapshot of at least one of the other nodes (Node1, Node2, and Node3), the read set information corresponding to the block identifier in the proposal message.

In this embodiment, because the read set information in the snapshot of the another node is generated by the another node when the another node executes the transaction task in the proposal message, that is, the read set information in the snapshot of the another node is read by the another node from the database of the another node when the another node executes the transaction task in the proposal message, when the result information obtained after execution by the first node is inconsistent with the result information indicated by the proposal message, the read set information that is obtained by the first node from the snapshot of the another node and that corresponds to the block identifier in the proposal message is equivalent to obtaining the original state data in the database of the another node. Therefore, the node can accurately verify whether the state data maintained by the first node has a problem, and can automatically complete restoration of the state data in the consensus process, thereby effectively improving consensus processing efficiency of the blockchain while ensuring security of the entire blockchain.

In an embodiment, the state data restoration method for a blockchain further includes: performing reliability verification on the read set information to obtain a verification result; and performing the operation of restoring the state data based on the read set information when the verification result indicates that the read set information is trustworthy.

The reliability verification refers to verifying a confidence level of the read set information, and the verification result refers to a result obtained by performing reliability verification on the read set information. For example, in this application, the result obtained by performing reliability verification on the read set information includes: The verification result indicates "trustworthy" and the verification result indicates "untrustworthy".

Specifically, as shown in FIG. 4, when a first node (Node4) as a follower node in the node cluster receives the proposal message broadcast by the leader node (Node1), after the first node (Node4) executes the transaction task in the proposal message based on the state data maintained by the first node, to obtain an execution result and a transaction read/write set that correspond to each transaction task, the first node may determine a transaction read/write set hash value of each transaction task based on the transaction read/write set corresponding to each transaction task, and compare the transaction read/write set hash value of each transaction task with the transaction read/write set hash value of each transaction task indicated by the proposal message, to obtain a comparison result.

When the comparison result indicates that the transaction read/write set hash value obtained by the first node (Node4) is inconsistent with the transaction read/write set hash value indicated by the proposal message, as shown in FIG. 4, the first node (Node4) may obtain, from the snapshot of at least one of the other nodes (Node1, Node2, and Node3), the read set information corresponding to the block identifier in the proposal message. After the first node (Node4) obtains, from the snapshot of at least one of the other nodes (Node1, Node2, and Node3), the read set information corresponding to the block identifier in the proposal message, assuming that the first node (Node4) separately obtains, from snapshots of the three nodes (Node1, Node2, and Node3), three pieces of read set information corresponding to the block identifier in the proposal message are a read set A, a read set B, and a read set C, the first node (Node4) needs to verify reliability of the three pieces of obtained read set information (the read set A, the read set B, and the read set C).

For example, the first node (Node4) needs to verify reliability of data in the obtained three pieces of read set information (the read set A, the read set B, and the read set C). After verification on the data in the read set information succeeds, the first node (Node4) further verifies the obtained three pieces of read set information (the read set A, the read set B, and the read set C) based on a preset condition. For example, the preset condition is: Obtained replies of f+1 nodes are consistent. That is, the first node (Node4) determines whether the three pieces of obtained read set information (the read set A, the read set B, and the read set C) are consistent. If the three pieces of read set information are consistent, a verification result indicating that the read set information (the read set A, the read set B, and the read set C) is trustworthy may be obtained, and the first node (Node4) may perform the operation of restoring, based on the read set information (the read set A, the read set B, and the read set C), the state data maintained by the first node.

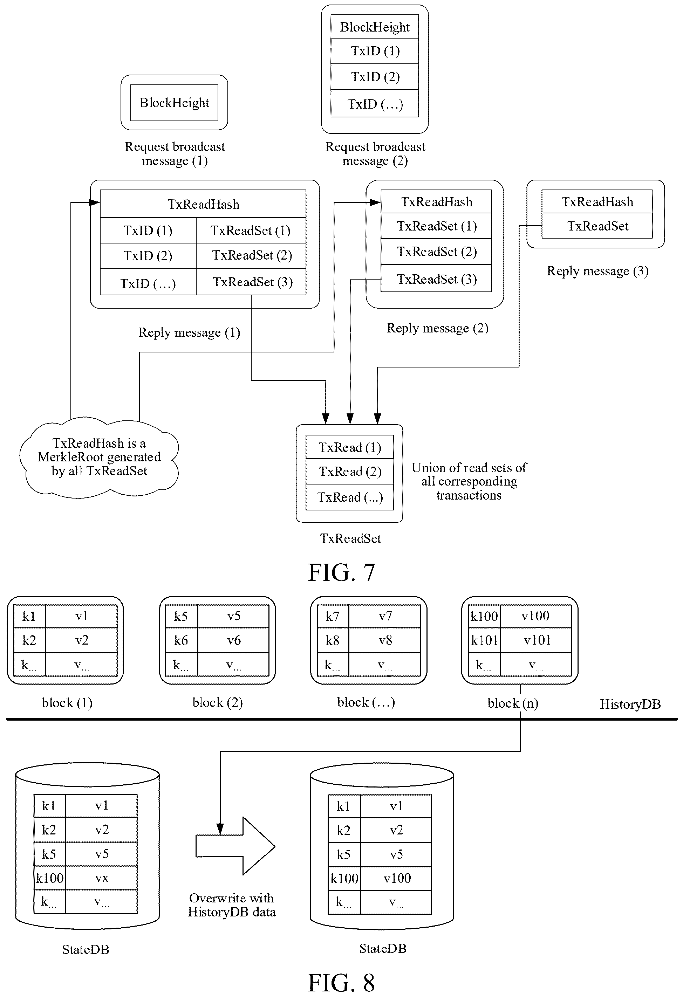

For example, as shown in FIG. 7, FIG. 7 is a schematic diagram of obtaining a read set broadcast message and a reply message. That is, for a process in which a node requests to obtain a read set in a snapshot of another node, a specific case of a structure of receiving a reply message for a broadcast message transmitted by the node is shown in FIG. 7.

As shown in FIG. 7, FIG. 7 shows structures of two broadcast messages and structures of three reply messages. When the transaction read/write set hash value calculated by the first node (Node4) is inconsistent with the transaction read/write set hash value indicated by the proposal message, the first node (Node4) may transmit a broadcast message configured for obtaining read set information. The broadcast information includes a block identifier (a block height), that is, a request broadcast message (1) shown in FIG. 7.

In addition, in some cases, the broadcast information may also include a block identifier (a block height) and a transaction task identifier (TxID), that is, a request broadcast message (2) shown in FIG. 7, so that another node returns a corresponding reply message based on the request broadcast message. That is, the first node (Node4) in this application may receive three types of reply messages shown in FIG. 7, including a reply message (1), a reply message (2), and a reply message (3). That is, when the first node (Node4) receives the reply message (1), the reply message (2), and the reply message (3) that are returned by other nodes (Node1, Node2, and Node3), the first node (Node4) may verify data in the reply message (1), the reply message (2), and the reply message (3). After verification succeeds, the first node (Node4) further needs to further determine whether the read set information in the reply message (1), the reply message (2), and the read set information in the reply message (3) is consistent. Assuming that the target quantity f+1=1+1=2, because the quantity n=3 of reply messages is greater than the target quantity f+1=1+1=2, that is, when the quantity of reply messages is greater than the target quantity, and the read set information in the reply messages is consistent, the read set information in the reply message (1), the reply message (2), and the reply message (3) is trustworthy, and the first node (Node4) may perform the operation of restoring, based on the read set information in the reply message (1), the reply message (2), and the reply message (3), the state data in the local database maintained by the first node.

In this way, a process of synchronizing state data can be completed at the same time of consensus, and HistoryDB does not need to be relied on. Because an operation is performed in the consensus process, on one hand, a processing procedure thereof is automatically completed, and on the other hand, a normal consensus processing procedure is not affected, thereby effectively improving a security problem of data restoration.

In an embodiment, the read set information includes key-value pair information, and the restoring the state data based on the read set information, to obtain restored state data includes: updating data in a local state database based on the key-value pair information, and using updated data as the restored state data.

The key-value pair information refers to key-value information generated in a transaction task execution process.

Specifically, when the transaction read/write set hash value K=4 of the transaction task A calculated by the first node (Node4) is inconsistent with the transaction read/write set hash value K=2 of the transaction task A indicated by the proposal message, the first node (Node4) may transmit a broadcast message (carrying the identifier of the transaction task A) configured for obtaining read set information, so that the other nodes (Node1, Node2, and Node3) return corresponding reply messages based on the identifier of the transaction task A in the broadcast message, that is, the reply messages returned by the other nodes carry read set information and MerkleRoot corresponding to the identifier of the transaction task A obtained from the snapshot, so that the node (Node4) can obtain, from the reply messages returned by the other nodes, the read set information and MerkleRoot corresponding to the transaction task A.

Assuming that the first node (Node4) obtains read set information A01, A02, and A03 from reply messages returned by other nodes (Node1, Node2, and Node3), when the first node (Node4) verifies that the read set information A01, A02, and A03 are consistent and trustworthy, the node (Node4) may select one of the read set information A01, A02, and A03, update key-value pair information in the selected read set information A02 to the state database maintained by the first node, to obtain updated state data A02, and use the updated state data A02 as restored state data, so that the node can re-execute each transaction task in the proposal message A based on the restored state data A02, to obtain a new execution result and a read/write set that correspond to each transaction task, and compare the new execution result and the read/write set with the execution result and the read/write set indicated by the proposal message to obtain a secondary comparison result. Therefore, the first node can accurately verify whether the state data maintained by the first node has a problem, and can automatically complete restoration of the state data in the consensus process, thereby effectively improving consensus processing efficiency of the blockchain while ensuring security of the entire blockchain.

In an embodiment, the state data restoration method for a blockchain further includes: deserializing the proposal message, to obtain a deserialized proposal message; and the executing the transaction task in the proposal message based on the state data includes: executing a transaction task in the deserialized proposal message based on the state data.

Deserialization refers to a process of converting information in a binary form into an original data structure. For example, after a proposal message in a binary form is converted into an original data structure, a transaction task in the data structure can be obtained.

Specifically, as shown in FIG. 5, FIG. 5 is an overall schematic flowchart of a state data restoration method for a blockchain according to an embodiment. In the process shown in FIG. 5, after a node (Node1) in the node cluster determines itself as a leader node, the leader node produces a block, and starts a new round of consensus. The leader node may broadcast a proposal message to follower nodes (Node2, Node3, and Node4) in the blockchain, so that the follower nodes (Node2, Node3, and Node4) reach consensus on the new block based on the transaction task in the proposal message. When the first node (Node4) as a follower node in the node cluster receives the proposal message broadcast by the leader node, the first node (Node4) may perform deserialization processing on the proposal message, that is, convert the proposal message (network message) into a data structure that can be processed in a program, and verify the proposal in the data structure. Content of the verification includes, but is not limited to, verification of validity of a block production node, verification of signature validity, and the like.

Further, when the first node (Node4) successfully verifies the proposal in the data structure, the first node (Node4) may execute, one by one (serially) based on the state data maintained by the first node, the transaction tasks included in the proposal, and add transaction task IDs whose transaction read/write set hash values are inconsistent to RWIDs.

Therefore, the node can accurately verify whether the state data maintained by the first node has a problem, and can automatically complete restoration of the state data in the consensus process, thereby effectively improving consensus processing efficiency of the blockchain while ensuring security of the entire blockchain.

In an embodiment, the state data restoration method for a blockchain further includes: performing validity verification on the deserialized proposal message, to obtain a verification result; and performing the operation of executing the transaction task in the deserialized proposal message based on the state data when the verification result indicates that verification succeeds.

In an embodiment, the state data restoration method for a blockchain further includes: discarding the proposal message when the verification result indicates that the verification fails.

Specifically, as shown in FIG. 5, FIG. 5 is an overall schematic flowchart of a state data restoration method for a blockchain according to an embodiment. In the process shown in FIG. 5, after a node (Node1) in the node cluster determines itself as a leader node, the leader node produces a block, and starts a new round of consensus. The leader node may broadcast a proposal message 1 to follower nodes (Node2, Node3, and Node4) in the blockchain, so that the follower nodes (Node2, Node3, and Node4) reach consensus on the new block based on the transaction task in the proposal message 1. When the first node (Node4) as a follower node in the node cluster receives the proposal message 1 broadcast by the leader node, the first node (Node4) may perform deserialization processing on the proposal message 1, that is, convert the proposal message 1 (network message) into a data structure that can be processed in a program, and verify the proposal in the data structure, to obtain a corresponding verification result. Content of the verification includes, but is not limited to, verification of validity of a block production node, verification of signature validity, and the like.

Further, when the verification result indicates that verification fails, the first node (Node4) may discard the proposal message 1. When the verification result indicates that verification succeeds, the first node (Node4) may perform the operation of executing a transaction task in a deserialized proposal message (a proposal in the data structure) based on the state data. That is, the first node (Node4) may perform transaction tasks included in the proposal one by one (serially) based on the state data maintained by the first node, and add transaction task IDs whose transaction read/write set hash values are inconsistent to RWIDs. Therefore, the node can accurately verify whether the state data maintained by the first node has a problem, and can automatically complete restoration of the state data in the consensus process, thereby effectively improving consensus processing efficiency of the blockchain while ensuring security of the entire blockchain.

In an embodiment, this application further provides an application scenario, and the application scenario uses the foregoing state data restoration method for a blockchain. Specifically, application of the state data restoration method for a blockchain in the application scenario is as follows:

When it is intended to complete restoration of state data at the same time of consensus, the foregoing state data restoration method for a blockchain may be used. That is, in a blockchain system, when a second node as a leader node in a node cluster produces a block, the second node broadcasts a proposal message to a follower node in the blockchain, so that the follower node reaches consensus on the new block. When a first node in the follower node receives the proposal message broadcast by the second node, the first node obtains the state data maintained by the first node, and executes the transaction task in the proposal message based on the state data, to obtain the result information. When the result information is inconsistent with the result information indicated by the proposal message, the first node may obtain, from a snapshot of another node, read set information corresponding to a block identifier in the proposal message, and restore the state data based on the read set information, to obtain restored state data. The restored state data is configured for re-executing the transaction task to obtain a new execution result. Because when the result information obtained after execution by the first node is inconsistent with the result information indicated by the proposal message, the read set information that is obtained by the first node from the snapshot of the another node and that corresponds to the block identifier in the proposal message is equivalent to obtaining the original state data in the database of the another node, the node may restore, based on the read set information obtained from the snapshot of the another node, the local state data maintained by the first node, to obtain restored state data, and subsequently, the node may re-execute the transaction task based on the restored state data, so as to complete a state data synchronization process while performing consensuses without relying on HistoryDB. Because the operations are performed in the consensus process, on one hand, a processing procedure thereof is automatically completed, and on the other hand, normal consensus is not affected, so that restoration of the state data can be completed in the consensus process, thereby effectively improving the consensus processing efficiency of the blockchain.

The method provided in this embodiment of this application may be applied to consensus scenarios of various blockchains. The following describes the state data restoration method for a blockchain provided in this embodiment of this application by using a blockchain consensus scenario in a BFT-type consensus environment as an example.

With the development of technologies, a blockchain technology is becoming more mature. Because the blockchain itself is transparent, more and more systems directly move services to the blockchain. The blockchain is essentially a distributed storage system, each node of the blockchain stores data, and the node stores data based on a database.

Generally, a blockchain has at least two databases: BlockDB and StateDB. The former is configured for storing transaction information, which is mainly transaction information transmitted by a user, a block header, and the like. The latter stores state data, which is key-value information generated in a transaction execution process.

Information of the StateDB is used in an actual transaction execution process. For example, a historical transaction modifies a value of a key, and a currently executed transaction needs to read the value. Although a node stores StateDB generally by using a database, this method is not entirely without problems. A part of data may be damaged due to some special reasons, such as power outage before writing is completed or damage to a disk corresponding to a file.

Therefore, a restoration mechanism is needed. For this problem, this application provides a mechanism for automatically performing restoration in a transaction execution process. By means of this mechanism, StateDB can be restored without external manual participation.

There are generally two solutions in a conventional manner:

The first solution, as shown in FIG. 8, is a schematic diagram of restoring data by using a HistoryDB database in a conventional manner. A database is added to a blockchain system: HistoryDB: This data is configured for storing all read/write sets (which may be understood as key-value) generated by a transaction of each block. Therefore, when restoration is needed, a processing manner shown in FIG. 8 may be used. In the processing manner shown in FIG. 8, content of a specific height is restored to data of a corresponding block in HistoryDB manually.

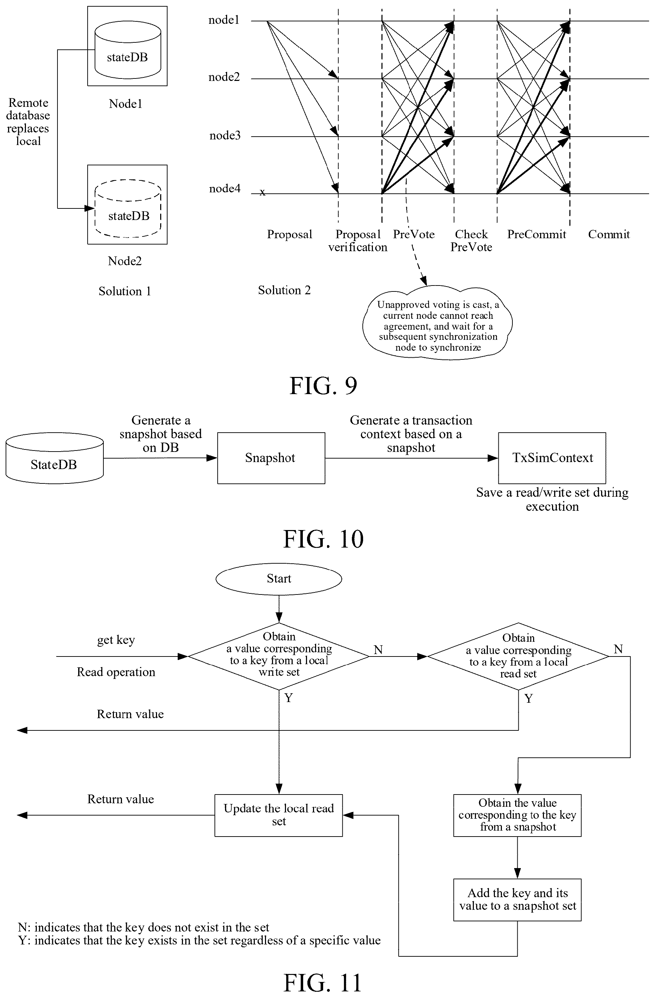

In the second solution, HistoryDB does not exist in the blockchain system. For this manner, there are two processing mechanisms in the industry. As shown in FIG. 9, FIG. 9 is a schematic diagram of restoring data in two different manners used in a conventional manner. Solution 1 shown in FIG. 9 is very simple, that is, data of stateDB is directly copied locally from an approved node. This manner needs manual intervention. Solution 2 shown in FIG. 9 does not care about a current error, that is, unapproved voting is cast in a consensus process. Therefore, a corresponding node cannot reach consensus in this round, and subsequently needs to synchronize block information of another node (the block information herein includes content of StateDB) in a synchronization manner. Therefore, it is required that synchronization needs to support a mode referred to as "rapid synchronization". In this mode, a node uses content of another node to overwrite local data.

Defects of the conventional manner are distinguished according to implementation solutions as follows:
1. The first solution (the solution having HistoryDB) has two problems. First, the solution is for a block. If damaged StateDB involves a plurality of blocks, it is difficult to restore HistoryDB because it is difficult to know specifically data of which blocks is damaged. Second, correctness of HistoryDB cannot be determined. If data in HistoryDB is also damaged, the data cannot be correctly restored.
2. Two approaches in the second solution are respectively described:
   1) The approach of direct copying: Biggest problems of the approach are two points. First, manual participation is needed. Because the matter of damage to StateDB is unpredictable, before manual intervention, data is continuously in an unusable state. Second, in a case that StateDB is very large and a data amount is very large, the problem of copying for a relatively long time may also exist.
   2) The rapid synchronization solution. A problem of this solution is that a node cannot perform normal consensus before synchronization is completed. In addition, because of the problem, the node may not be able to perform normal consensus.

Therefore, to resolve the foregoing problems, this application provides a solution, that is, this application provides a state data restoration for a blockchain. Key problems to be resolved in this application include the following:

To resolve the problems of the foregoing solutions in the industry, an optimized processing solution is provided. In this solution, a process of synchronizing StateDB may be completed at the same time of consensus. This manner does not need to rely on HistoryDB. In addition, because operations are performed in the consensus process, a processing process thereof is automatically completed, and normal consensus is not affected. Therefore, restoration of state data can be completed in the consensus process, thereby effectively improving consensus processing efficiency of the blockchain while ensuring security of the entire blockchain.

On a product side, the method provided in this application may be applied to actual development of underlying blockchain software, and code-level implementation may be performed according to the solution of this application, to optimize corresponding underlying blockchain code.

### On a technical side

### 1.1 Overall procedure

A core of the solution provided in this application is as follows: When a follower node checks a proposal, if the follower node finds that an execution state of the follower node is inconsistent with that of a leader node, to some extent, a local stateDB may have a problem (certainly, the leader node may be malicious), and a processing process of the follower node is as follows: The follower node may obtain a read set in this operation from another node, then update, by using the read set, state data maintained by the first node, and then re-execute the transaction based on updated state data.

From the perspective of a consensus procedure, an overall procedure is shown in FIG. 5.

As shown in FIG. 6, to ensure that the follower node can accurately verify that a read/write set has a problem, the leader node actually has two proposal solutions:
1. Each transaction carries a corresponding read/write set hash (that is, a transaction read/write set hash). In this way, during verification, the follower node can accurately determine which transactions are inconsistent, and in this way, can clearly know which keys in the stateDB have problems.
2. A transaction does not need to carry a corresponding read/write set hash, but needs to carry a Merkle root (that is, a block read/write set hash) generated by the read/write set hash. In this way, it can be determined whether a read/write set is indeed problematic.

### 1.2 Read/write set request or reply

When a follower node finds that a read/write set of the follower node is inconsistent with a read/write set indicated by a proposal message, the follower node needs to obtain corresponding information from another node. The information is read set information read from a snapshot when the node executes a transaction, that is, information of a key read from the snapshot.

As shown in FIG. 10, FIG. 10 is a schematic diagram of a transaction execution process. A read set generated during execution of the transaction is actually read from snapshots from a plurality of aspects. As shown in FIG. 10, the read set is preferentially read from a write set, then read from a read set, and finally read from a snapshot. For transaction execution, an overall data flow thereof is shown in FIG. 10, and final transaction execution is based on a transaction context.

FIG. 11 is a schematic diagram of another node generating a read set. For another node, a process of generating a read set is shown in FIG. 11.

For a process of obtaining a read set, messages transmitted and replied to the read set are shown in FIG. 7. In practice, a request and a reply may be matched with each other. For different matches, a node needs to use different processing processes.

An overall processing procedure of the state data restoration method for a blockchain provided in this application is shown in FIG. 5. Particularly, to ensure security of decision, information in a read set can be used only when the information in the read set satisfies a condition of f+1, where f+1 indicates that there is definitely one honest node making a reply, and data in the reply message can be used.

Beneficial effects generated by the technical solutions of this application include the following:
A synchronization process of StateDB can be completed at the same time of consensus, and HistoryDB does not need to be relied on. Because operations are performed in the consensus process, on one hand, a processing process of StateDB is automatically completed, and on the other hand, normal consensus is not affected, so that state data can be restored in the consensus process, thereby effectively improving consensus processing efficiency of the blockchain while ensuring security of the entire blockchain.

Although the operations are displayed sequentially according to the instructions of the arrows in the flowcharts of the embodiments, these operations are not necessarily performed sequentially according to the sequence instructed by the arrows. Unless otherwise explicitly specified in this application, execution of the operations is not strictly limited, and the operations may be performed in other sequences. Moreover, at least some of the operations in each embodiment may include a plurality of operations or a plurality of stages. The operations or stages are not necessarily performed at the same moment but may be performed at different moments. Execution of the operations or stages is not necessarily sequentially performed, but may be performed alternately with other operations or at least some of operations or stages of other operations.

Based on the same inventive concept, an embodiment of this application further provides a state data restoration method for a blockchain configured for implementing the foregoing state data restoration apparatus for a blockchain. An implementation solution for resolving a problem provided by the apparatus is similar to an implementation solution recorded in the foregoing method. Therefore, for a specific limitation in the following embodiment of the one or more state data restoration apparatuses for a blockchain, refer to the foregoing limitation on the state data restoration method for a blockchain. Details are not described herein again.

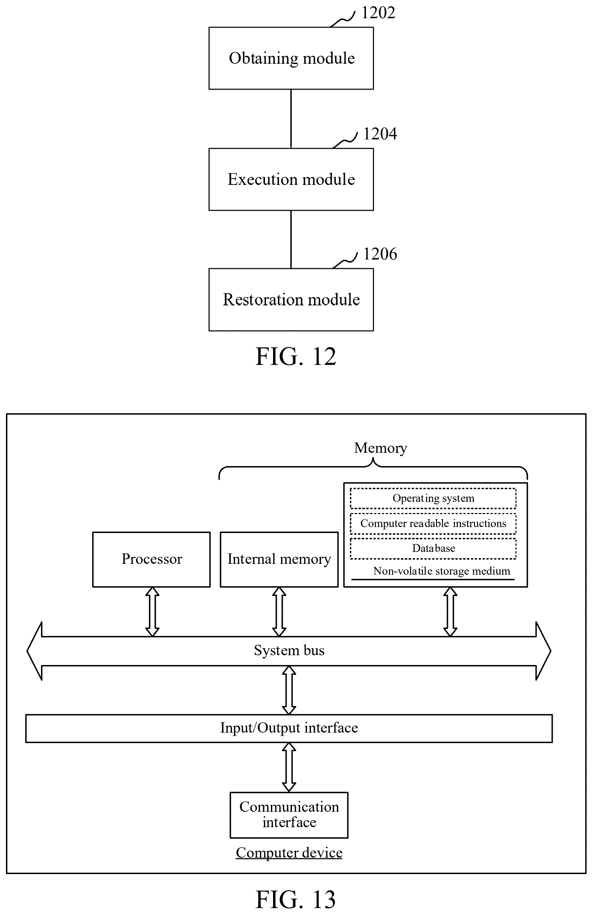

In an embodiment, as shown in FIG. 12, a state data restoration apparatus for a blockchain is provided, including: an obtaining module 1202, an execution module 1204, and a restoration module 1206.

The obtaining module 1202 is configured to obtain, when receiving a proposal message broadcast by a second node in the blockchain system, state data maintained by the first node, the proposal message indicating existence of a transaction task, result information for the transaction task, and a block identifier;
the execution module 1204 is configured to execute the transaction task in the proposal message based on the state data, to obtain result information;
the obtaining module 1202 is further configured to: obtain, when the result information obtained after executing the transaction task is inconsistent with the result information indicated by the proposal message, read set information that corresponds to the block identifier in the proposal message from a snapshot of another node in the blockchain system, the another node being a node in the blockchain system other than the first node; and
the restoration module 1206 is configured to restore the state data based on the read set information, to obtain restored state data, the restored state data being configured for re-executing the transaction task to obtain an execution result.

In an embodiment, the result information includes an execution result and a transaction read/write set; and the obtaining module 1202 is further configured to obtain, when receiving the proposal message broadcast by the second node in the blockchain system, state data from a state database maintained by the first node; and obtain a contract that corresponds to the transaction task in the proposal message. The execution module 1204 is further configured to execute the transaction task in the proposal message based on the contract and the state data, to obtain the execution result and the transaction read/write set.

In an embodiment, the result information includes a transaction read/write set corresponding to the transaction task, and the proposal message further indicates existence of a transaction read/write set hash value determined based on the transaction read/write set corresponding to the transaction task. The apparatus further includes: a voting module, configured to determine a transaction read/write set hash value of the transaction task based on the transaction read/write set; configured to compare the transaction read/write set hash value with the transaction read/write set hash value indicated by the proposal message, to obtain a comparison result; configured to generate a voting message of the first node in a round based on the comparison result; determine, when receiving a voting message of another node in a round broadcast by the another node, a voting message of the first node in another round based on the voting message of the first node in a round and the voting message of the another node in a round; and determine, when receiving a voting message of the another node in another round broadcast by the another node, a consensus result of a block corresponding to the block identifier based on the voting message of the first node in another round and the voting message of the another node in another round.

In an embodiment, the voting module is further configured to: obtain the read set information corresponding to the block identifier in the proposal message from a snapshot of at least one node in the another node when the comparison result indicates that the transaction read/write set hash value in the result information is inconsistent with the transaction read/write set hash value indicated by the proposal message.

In an embodiment, the voting module is further configured to: obtain a quantity of fault-tolerant nodes in the blockchain system, and determine a target quantity based on the quantity of fault-tolerant nodes, the target quantity being greater than the quantity of fault-tolerant nodes; select nodes of the target quantity from the another node; and search snapshots of the nodes of the target quantity for the read set information corresponding to the block identifier in the proposal message.

In an embodiment, the voting module is further configured to wait, when the read set information is not found, for the another node to execute the transaction task in the proposal message, so that the another node updates the snapshot after completing the execution, and searching the updated snapshot for the read set information corresponding to the block identifier.

In an embodiment, the apparatus further includes: an addition module, a transmitting module, and a processing module.

The addition module is configured to add a transaction identifier of the transaction task to a target set when the comparison result indicates that the transaction read/write set hash value in the result information is inconsistent with the transaction read/write set hash value indicated by the proposal message; and
a transmitting module, configured to transmit a broadcast message configured for obtaining the read set information, the broadcast message including a transaction identifier of a transaction task in the target set, so that the another node returns a corresponding reply message based on the transaction identifier of the transaction task in the target set.

The processing module is configured to perform deserialization processing on the reply message when receiving the reply message returned by the another node, to obtain a data structure obtained after the deserialization processing; and use data in the data structure as the read set information corresponding to the block identifier in the proposal message.

In an embodiment, the restoration module 1206 is further configured to determine a quantity of reply messages when receiving the reply message returned by the another node; and restore the state data based on the read set information when the quantity of reply messages is greater than or equal to a target quantity, and read set information in the reply messages is consistent, the target quantity being determined based on the quantity of fault-tolerant nodes in the blockchain system, and the target quantity being greater than the quantity of fault-tolerant nodes.

In an embodiment, the result information includes a transaction read/write set corresponding to the transaction task, the proposal message indicates existence of a first block read/write set hash value, the first block read/write set hash value is generated based on transaction read/write sets of all transaction tasks in the block corresponding to the block identifier.

The obtaining module 1202 is further configured to determine a second block read/write set hash value based on the transaction read/write set of the transaction task; and obtain the read set information corresponding to the block identifier in the proposal message from a snapshot of at least one node in the another node when the second block read/write set hash value is inconsistent with the first block read/write set hash value.

In an embodiment, the restoration module 1206 is further configured to perform reliability verification on the read set information to obtain a verification result; and restore the state data based on the read set information when the verification result indicates that the read set information is trustworthy.

In an embodiment, the read set information includes key-value pair information, and the restoration module 1206 is further configured to: update data in a local state database based on the key-value pair information, and use updated data as the restored state data.

In an embodiment, the execution module 1204 is further configured to deserialize the proposal message, to obtain a deserialized proposal message; and execute a transaction task in the deserialized proposal message based on the state data.

In an embodiment, the execution module 1204 is further configured to perform validity verification on the deserialized proposal message, to obtain a verification result; and execute the transaction task in the deserialized proposal message based on the state data when the verification result indicates that verification succeeds.

In an embodiment, the execution module 1204 is further configured to discard the proposal message when the verification result indicates that the verification fails.

All modules in the state data restoration apparatus for a blockchain may be implemented in whole or in part by using software, hardware, and a combination thereof. The foregoing modules may be embedded in or independent of a processor in the computer device in a hardware form, or may be stored in a memory in the computer device in a software form, so that the processor invokes the software to execute operations corresponding to the foregoing modules.

In an embodiment, a computer device is provided. The computer device may be a server, and an internal structure diagram of the computer device may be shown in FIG. 13. The computer device includes a processor, a memory, an input/output (briefly referred to as I/O) interface, and a communication interface. The processor, the memory, and the input/output interface are connected to each other by using a system bus, and the communication interface is connected to the system bus by using the input/output interface. The processor of the computer device is configured to provide a computing and control capability. The memory of the computer device includes a non-volatile storage medium and an internal memory. The non-volatile storage medium stores an operating system, computer readable instructions, and a database. The internal memory provides an environment for running an operating system and computer readable instructions in the non-volatile storage medium. A database of the computer device is configured to store state data of a blockchain. The input/output interface of the computer device is configured to exchange information between the processor and an external device. The communication interface of the computer device is configured to communicate with an external terminal by using a network connection. When the computer readable instructions are executed by the processor, a state data restoration method for a blockchain is implemented.

A person skilled in the art may understand that the structure shown in FIG. 13 is merely a block diagram of a partial structure related to the solutions of this application, and does not constitute a limitation on the computer device to which the solutions of this application are applied. A specific computer device may include more or fewer components than those shown in the figure, or combine some components, or have different component arrangements.

In an embodiment, a computer device is provided, including a memory and a processor, where the memory stores computer readable instructions, and the processor implements operations in the foregoing method embodiments when executing the computer readable instructions.

In an embodiment, a computer readable storage medium is provided, where the computer readable storage medium has computer readable instructions stored therein, and operations in the foregoing method embodiments are implemented when the computer readable instructions are executed by a processor.

In an embodiment, a computer program product is provided, including computer readable instructions, and the computer readable instructions are executed by a processor to implement operations in the foregoing method embodiments.

User information (including but not limited to user device information, user personal information, and the like) and data (including but not limited to data configured for analysis, stored data, and displayed data) involved in this application are information and data that are authorized by a user or that are fully authorized by each party, and related data needs to be collected, used, and processed in compliance with relevant national laws and standards.

A person of ordinary skill in the art may understand that all or some of procedures of the method in the foregoing embodiments may be implemented by computer readable instructions instructing relevant hardware. The computer readable instructions may be stored in a non-volatile computer readable storage medium. When the computer readable instructions are executed, the procedures of the foregoing method embodiments may be implemented. Any reference to a memory, a database, or another medium used in the embodiments provided in this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory

(ReRAM), a magnetoresistive random access memory (MRAM), a ferroelectric random access memory (FRAM), a phase change memory (PCM), a graphene memory, and the like. The volatile memory may include a random-access memory (RAM) and an external cache. As an illustration but not a limitation, the RAM may be in a plurality of forms, such as a static random access memory (SRAM) or a dynamic random access memory (DRAM). The database involved in the embodiments provided in this application may include at least one of a relational database and a non-relational database. The non-relational database may include a blockchain-based distributed database or the like, which is not limited thereto. The processor in the embodiments provided in this application may be a general purpose processor, a central processing unit, a graphics processor, a digital signal processor, a programmable logic device, a quantum computing-based data processing logic device, or the like, which is not limited thereto.

Technical features of the foregoing embodiments may be combined in different manners to form other embodiments. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of this application, which are described specifically and in detail, but cannot be construed as a limitation to the patent scope of this application. For a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. A state data restoration method for a blockchain, performed by a computer device maintaining a first node in a blockchain system, and comprising:
obtaining, in response to receiving a proposal message broadcast by a second node of the blockchain system, state data maintained by the first node, the proposal message comprising a transaction task, result information for the transaction task, and a block identifier;
executing the transaction task in the proposal message based on the state data, to obtain reference result information;
obtaining, in response to the reference result information being inconsistent with the result information, read set information that corresponds to the block identifier in the proposal message from a snapshot of another node in the blockchain system, in order to restore the state data based on the read set information, the another node being a node in the blockchain system other than the first node.

2. The method according to claim 1, wherein the reference result information comprises a reference execution result and a reference transaction read/write set; and
the obtaining, in response to receiving a proposal message broadcast by a second node of the blockchain system, state data maintained by the first node comprises:
obtaining, in response to receiving the proposal message broadcast by the second node of the blockchain system, the state data from a state database maintained by the first node; and
the executing the transaction task in the proposal message based on the state data, to obtain reference result information comprises:
obtaining a contract that corresponds to the transaction task in the proposal message, and executing the transaction task in the proposal message based on the contract and the state data, to obtain the reference execution result and the reference transaction read/write set.

3. The method according to claim 1 or 2, wherein the result information comprises a transaction read/write set corresponding to the transaction task, and the proposal message further comprises a transaction read/write set hash value determined based on the transaction read/write set corresponding to the transaction task; and
the method further comprises:
determining a reference transaction read/write set hash value of the transaction task based on the reference transaction read/write set;
comparing the reference transaction read/write set hash value with the transaction read/write set hash value, to obtain a comparison result;
generating a voting message of the first node in a first round based on the comparison result;
determining, in response to receiving a voting message of another node in the first round broadcast by the another node, a voting message of the first node in a second round based on the voting message of the first node in the first round and the voting message of the another node in the first round; and
determining, in response to receiving a voting message of the another node in the second round broadcast by the another node, a consensus result of a block corresponding to the block identifier based on the voting message of the first node in the second round and the voting message of the another node in the second round.

4. The method according to claim 3, wherein the obtaining, in response to the reference result information being inconsistent with the result information, read set information that corresponds to the block identifier in the proposal message from a snapshot of another node in the blockchain system comprises:
obtaining the read set information corresponding to the block identifier in the proposal message from a snapshot of at least one of reference nodes in the blockchain system in response to the comparison result indicating that the reference transaction read/write set hash value in the reference result information is inconsistent with the transaction read/write set hash value, each reference node being a node in the blockchain system other than the first node.

5. The method according to claim 4, wherein the obtaining the read set information corresponding to the block identifier in the proposal message from a snapshot of at least one reference node in the blockchain system comprises:
obtaining a quantity of fault-tolerant nodes in the blockchain system, and determining a target quantity based on the quantity of fault-tolerant nodes, the target quantity being greater than the quantity of fault-tolerant nodes;
selecting the target quantity of nodes from the reference nodes; and
searching, in snapshots of the target quantity of nodes, for the read set information corresponding to the block identifier in the proposal message.

6. The method according to claim 5, further comprising:
waiting, in response to failing to find the read set information, for the reference nodes to execute the transaction task in the proposal message, so that the reference nodes update respective snapshots after the transaction task is executed, and searching, in the updated snapshots, for the read set information corresponding to the block identifier.

7. The method according to any one of claims 3 to 6, wherein the method further comprises:
adding a transaction identifier of the transaction task to a target set in response to the comparison result indicating that the reference transaction read/write set hash value in the reference result information is inconsistent with the transaction read/write set hash value; and
the obtaining read set information that corresponds to the block identifier in the proposal message from a snapshot of another node in the blockchain system comprises:
transmitting a broadcast message configured for obtaining the read set information, the broadcast message comprising a transaction identifier of a transaction task in the target set, so that each of the reference nodes returns a corresponding reply message based on the transaction identifier of the transaction task in the target set;
performing deserialization processing on the reply message in response to receiving the reply message returned by each reference node, to obtain a data structure obtained after the deserialization processing; and
determining data in the data structure as the read set information corresponding to the block identifier in the proposal message.

8. The method according to claim 7, wherein the method further comprises:
determining a quantity of reply messages in response to receiving the reply messages returned by respective reference nodes; and
performing the restoring the state data based on the read set information in response to the quantity of reply messages is greater than or equal to a target quantity, and pieces of read set information in the reply messages are consistent, the target quantity being determined based on the quantity of fault-tolerant nodes in the blockchain system, and the target quantity being greater than the quantity of fault-tolerant nodes.

9. The method according to any one of claims 1 to 3, wherein the result information comprises a transaction read/write set corresponding to the transaction task, the proposal message comprises a first block read/write set hash value, the first block read/write set hash value is generated based on transaction read/write sets of all transaction tasks in the block corresponding to the block identifier, and the method further comprises:
determining a second block read/write set hash value based on the transaction read/write set of the transaction task; and
the obtaining, in response to the reference result information being inconsistent with the result information, read set information that corresponds to the block identifier in the proposal message from a snapshot of another node in the blockchain system comprises:
obtaining the read set information corresponding to the block identifier in the proposal message from a snapshot of at least one of the reference nodes in response to the second block read/write set hash value being inconsistent with the first block read/write set hash value.

10. The method according to any one of claims 1 to 9, wherein the method further comprises:
performing reliability verification on the read set information to obtain a verification result; and
performing the restoring the state data based on the read set information in response to the verification result indicating that the read set information is trustworthy.

11. The method according to any one of claims 1 to 10, wherein the read set information comprises key-value pair information, and the restoring the state data based on the read set information comprises:
updating data in a local state database based on the key-value pair information, and determining updated data as the restored state data.

12. The method according to any one of claims 1 to 11, wherein the method further comprises:
deserializing the proposal message, to obtain a deserialized proposal message; and
the executing the transaction task in the proposal message based on the state data comprises:
executing a transaction task in the deserialized proposal message based on the state data.

13. The method according to claim 12, wherein the method further comprises:
performing validity verification on the deserialized proposal message, to obtain a verification result; and
performing the executing the transaction task in the deserialized proposal message based on the state data in response to the verification result indicating that validity verification succeeds.

14. The method according to claim 13, wherein the method further comprises:
discarding the proposal message in response to the verification result indicating that the validity verification fails.

15. A state data restoration apparatus for a blockchain, comprising:
an obtaining module, configured to obtain, in response to receiving a proposal message broadcast by a second node of the blockchain system, state data maintained by the first node, the proposal message comprising a transaction task, result information for the transaction task, and a block identifier;
an execution module, configured to execute the transaction task in the proposal message based on the state data, to obtain reference result information; and
a restoration module, configured to: obtain, in response to the reference result information being inconsistent with the result information, read set information that corresponds to the block identifier in the proposal message from a snapshot of another node in the blockchain system, in order to restore the state data based on the read set information, the another node being a node in the blockchain system other than the first node.

16. A computer device, comprising a memory and a processor, the memory storing computer readable instructions, and the processor implementing the method according to any one of claims 1 to 14 when executing the computer readable instructions.

17. A computer readable storage medium, having computer readable instructions stored therein, the computer readable instructions being executed by a processor to implement the method according to any one of claims 1 to 14.

18. A computer program product, comprising computer readable instructions, the computer readable instructions being executed by a processor to implement the method according to any one of claims 1 to 14.
